# EUROPEAN PATENT APPLICATION

(11) **EP 3 159 839 A1**
(43) Date of publication of application: **26.04.2017**
(21) Application number: 16194746.0
(22) Date of filing: 20.10.2016
(51) Int. Cl.: G06Q 10/10, H04L 12/58

(54) **ELECTRONIC DEVICE AND METHOD FOR PROCESSING MESSAGE**

(30) Priority: 20.10.2015 KR 20150145932
(71) Applicant: Samsung Electronics Co., Ltd., Gyeonggi-do 16677 (KR)
(72) Inventor: KIM, Boseong, 16677 Gyeonggi-do (KR); YOON, Sujeong, 16677 Gyeonggi-do (KR); KANG, Jinseok, 16677 Gyeonggi-do (KR); LEE, Jaeyoung, 16677 Gyeonggi-do (KR); JANG, Dongho, 16677 Gyeonggi-do (KR)
(74) Representative: HGF Limited

(57) **Abstract**

A message processing operation of an electronic device that includes a processor is provided. The message processing operation includes running an application for processing a message, providing a screen displaying a first unread message and a second unread message through the application, and processing message read confirmation of the first unread message at a first time and processing message read confirmation of the second unread message at a second time that is different from the first time.

## Description

### TECHNICAL FIELD

The present disclosure relates to a method for processing a message and a device for the same. More particularly, the present disclosure relates to a method for processing whether a message has been read and a device for the same.

### BACKGROUND

Recent technological advancements have provided a message service that enables exchanges of messages or content with a counterpart electronic device using various types of electronic devices, including smartphones, tablets, and smart watches, with little to no time and space constraints. A message service of the related art has been generally used as a way of communication with other users but has been evolving into a service including diverse functions in recent years. For example, a message service, such as an email service, a short message service (SMS), and a call, is frequently used in a working environment that involves collaboration. Further, a messenger service may support transmissions of messages relating to business directives, business reports, and group notifications to counterparts via a chat room. In addition, the messenger service enables the sharing of content including pictures, documents, and video with counterparts.

Meanwhile, with the development of the messenger service, the quality and reliability of the messenger service has become increasingly important so that messages and content are easily shared between a user and a counterpart who use the messenger service. For example, there may be provided a messenger service function for determining whether a recipient has checked a message sent by a user.

The above information is presented as background information only to assist with an understanding of the present disclosure. No determination has been made, and no assertion is made, as to whether any of the above might be applicable as prior art with regard to the present disclosure.

### SUMMARY

In a method of checking by a conventional messenger service whether a recipient has read a message in the related art, when the recipient logs in to a server providing a messenger service and participates in or joins a chat room, it is determined that the recipient has read all messages provided in the chat room before participation or joining. In this case, if the recipient participates in the chat room, it may be determined that the recipient has read all the messages although the recipient actually has not read the messages.

Further, when a large number of members participate in a chat room and displays too many messages, a user may not properly read all the messages but only checks the latest messages to understand context and to continue a chat. However, a counterpart may mistake the user as having read messages, even though the user has not read the messages, causing miscommunication between the user and the counterpart. Moreover, when important business discussions occur in a chat room, the user may miss an important message.

Aspects of the present disclosure are to resolve at least the above-mentioned problems and/or disadvantages and to provide at least the advantages described below. Accordingly, an aspect of the present disclosure is to provide accurate message reading information, thereby improving the quality and reliability of a message service. That is, the various embodiments of the present disclosure may provide a method for improving the reliability and utilization of a message service in various environments including a business environment and an electronic device.

Technical goals to be achieved through the various embodiments of the present disclosure are not limited to the foregoing goals, and other technical goals may be inferred from the following embodiments.

In accordance with an aspect of the present disclosure, an electronic device including a processor is provided. The electronic device includes running an application for processing a message, providing a screen displaying a first unread message and a second unread message through the application, and processing message read confirmation of the first unread message at a first time and processing message read confirmation of the second unread message at a second time that is different from the first time.

The first time and the second time may be determined based on screen-displayed states of the first unread message and the second unread message, respectively.

The processing of the message read confirmation of the first unread message and the message read confirmation of the second unread message may include processing the first unread message and the second unread message as read when times for which the first unread message and the second unread message are displayed on the screen are a threshold or longer.

The first time and the second time may be determined based on a read unit according to a number of at least one of numbers, symbols, letters, words, and sentences included in the first unread message and the second unread message, respectively.

When a virtual keypad is displayed on the screen, time for which the virtual keypad is displayed may be excluded from the times for which the first unread message and the second unread message are displayed on the screen.

The first time and the second time may be determined based on a user's scroll speed on the screen.

The processing of the message read confirmation of the first unread message and the message read confirmation of the second unread message may include processing the first unread message and the second unread message as read when the scroll speed is less than a threshold.

The first time and the second time may be determined based on sizes of screen-displayed portions of the first unread message and the second unread message, respectively.

The operation method may further include transmitting first message read information based on the message read confirmation of the first unread message and second message read information based on the message read confirmation of the second unread message to a server outside the electronic device.

The first time and the second time may be determined based on a user's gaze at the screen of the electronic device.

The operation method may further include displaying a message that is processed as read and a message that is processed as unread in a distinguishable manner according to the message read confirmations.

In accordance with another aspect of the present disclosure, an electronic device for processing a message is provided. The electronic device includes a display configured to display a screen displaying a first unread message and a second unread message, and a processor configured to process message read confirmation of a first unread message at a first time and to process message read confirmation of a second unread message at a second time that is different from the first time.

The first time and the second time may be determined based on screen-displayed states of the first unread message and the second unread message, respectively.

When times for which the first unread message and the second unread message are displayed on the screen meet or exceed a threshold, the processor may process the first unread message and the second unread message as read.

The first time and the second time may be determined based on a read unit according to a number of at least one of numbers, symbols, letters, words, and sentences included in the first unread message and the second unread message, respectively.

When a virtual keypad is displayed on the screen, time for which the virtual keypad is displayed may be excluded from the times for which the first unread message and the second unread message are displayed on the screen.

The first time and the second time may be determined based on a user's scroll speed on the screen.

When the scroll speed is less than a threshold, the processor may process the first unread message and the second unread message as read.

The first time and the second time may be determined based on sizes of screen-displayed portions of the first unread message and the second unread message, respectively.

The electronic device of claim may further include a communication unit or transmitter configured to transmit first message read information based on the message read confirmation of the first unread message and second message read information based on the message read confirmation of the second unread message to a server outside the electronic device.

The first time and the second time may be determined based on a user's gaze at the screen of the electronic device.

The processor may further be configured to display on a display a message that is processed as read and a message that is processed as unread in a distinguishable manner according to the message read confirmations.

In accordance with another aspect of the present disclosure, a non-transitory computer-readable recording medium having recorded thereon at least one program comprising commands, which when executed by a computer, performs a method is provided. The method includes running an application for processing a message, providing a screen including a first unread message and a second unread message through the application, processing message read confirmation of the first unread message at a first time, and processing message read confirmation of the second unread message at a second time that is different from the first time.

The first time and the second time may be determined based on screen-displayed states of the first unread message and the second unread message, respectively.

According to various embodiments of the present disclosure, a user may read messages sent by a sender without missing any message. Further, the sender may accurately confirm whether the user has read the messages sent by the sender. Accordingly, reliability between the user and the sender who use a message service may be enhanced.

Further, when the user misses a message sent by the sender, it is possible to provide the user with missed messages at one time, thereby increasing the convenience of the user using the message service.

Other aspects, advantages, and salient features of the disclosure will become apparent to those skilled in the art from the following detailed description, which, taken in conjunction with the annexed drawings, discloses various embodiments of the present disclosure.

### BRIEF DESCRIPTION OF THE DRAWINGS

The above and other aspects, features, and advantages of certain embodiments of the present disclosure will be more apparent from the following description taken in conjunction with the accompanying drawings, in which:
FIG. 1 illustrates a network environment to provide a message service according to an embodiment of the present disclosure;
FIG. 2 is a block diagram illustrating components of a server according to an embodiment of the present disclosure;
FIG. 3 illustrates a hardware configuration of an electronic device that processes a message according to an embodiment of the present disclosure;
FIG. 4 illustrates a software configuration of the electronic device that processes the message according to an embodiment of the present disclosure;
FIG. 5 is a flowchart illustrating a process in which the electronic device checks whether a message is displayed on a screen according to an embodiment of the present disclosure;
FIGS. 6, 7, 8, 9A, 9B, and 9C illustrate a process in which the electronic device processes message read confirmation of an unread message according to various embodiments of the present disclosure;
FIG. 10 is a flowchart illustrating a process in which the electronic device processes message read confirmation based on a gaze according to an embodiment of the present disclosure;
FIGS. 11A and 11 B illustrates a user interface (UI) indicating whether a user has read a message received by the electronic device according to an embodiment of the present disclosure;
FIG. 12 illustrates a UI indicating whether a recipient has read a message sent by the electronic device according to an embodiment of the present disclosure;
FIG. 13 is a flowchart illustrating a message processing operation of the electronic device according to an embodiment of the present disclosure;
FIG. 14 illustrates an electronic device in a network environment according to an embodiment of the present disclosure;
FIG. 15 is a block diagram of an electronic device according to an embodiment of the present disclosure; and
FIG. 16 is a block diagram of a program module according to an embodiment of the present disclosure.

Throughout the drawings, like reference numerals will be understood to refer to like parts, components, and structures.

### DETAILED DESCRIPTION

The following description with reference to the accompanying drawings is provided to assist in a comprehensive understanding of various embodiments of the present disclosure as defined by the claims and their equivalents. It includes various specific details to assist in that understanding but these are to be regarded as merely exemplary. Accordingly, those of ordinary skill in the art will recognize that various changes and modifications of the various embodiments described herein can be made without departing from the scope and spirit of the present disclosure. In addition, descriptions of well-known functions and constructions may be omitted for clarity and conciseness.

The terms and words used in the following description and claims are not limited to the bibliographical meanings, but, are merely used by the inventor to enable a clear and consistent understanding of the present disclosure. Accordingly, it should be apparent to those skilled in the art that the following description of various embodiments of the present disclosure is provided for illustration purpose only and not for the purpose of limiting the present disclosure as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

As used herein, the expression "have", "may have", "include", or "may include" refers to the existence of a corresponding feature (e.g., numeral, function, operation, or constituent element such as component), and does not exclude one or more additional features.

In the present disclosure, the expression "A or B", "at least one of A or/and B", or "one or more of A or/and B" may include all possible combinations of the items listed. For example, the expression "A or B", "at least one of A and B", or "at least one of A or B" refers to all of (1) including at least one A, (2) including at least one B, or (3) including all of at least one A and at least one B.

The expression "a first", "a second", "the first", or "the second" used in various embodiments of the present disclosure may modify various components regardless of the order and/or the importance but does not limit the corresponding components. For example, a first user device and a second user device indicate different user devices although both of them are user devices. For example, a first element may be termed a second element, and similarly, a second element may be termed a first element without departing from the scope of the present disclosure.

It should be understood that when an element (e.g., first element) is referred to as being (operatively or communicatively) "connected," or "coupled," to another element (e.g., second element), it may be directly connected or coupled directly to the other element or any other element (e.g., third element) may be interposer between them. In contrast, it may be understood that when an element (e.g., first element) is referred to as being "directly connected," or "directly coupled" to another element (second element), there are no element (e.g., third element) interposed between them.

The expression "configured to" used in the present disclosure may be exchanged with, for example, "suitable for", "having the capacity to", "designed to", "adapted to", "made to", or "capable of" according to the situation. The term "configured to" may not necessarily imply "specifically designed to" in hardware. Alternatively, in some situations, the expression "device configured to" may mean that the device, together with other devices or components, "is able to". For example, the phrase "processor adapted (or configured) to perform A, B, and C" may mean a dedicated processor (e.g. embedded processor) only for performing the corresponding operations or a generic-purpose processor (e.g., central processing unit (CPU) or application processor (AP)) that can perform the corresponding operations by executing one or more software programs stored in a memory device.

The terms used in the present disclosure are only used to describe specific embodiments, and are not intended to limit the present disclosure. As used herein, singular forms may include plural forms as well unless the context clearly indicates otherwise. Unless defined otherwise, all terms used herein, including technical and scientific terms, have the same meaning as those commonly understood by a person skilled in the art to which the present disclosure pertains. Such terms as those defined in a generally used dictionary may be interpreted to have the meanings equal to the contextual meanings in the relevant field of art, and are not to be interpreted to have ideal or excessively formal meanings unless clearly defined in the present disclosure. In some cases, even the term defined in the present disclosure should not be interpreted to exclude embodiments of the present disclosure.

In this disclosure, an electronic device may be a device that involves a communication function. For example, an electronic device may be a smart phone, a tablet personal computer (PC), a mobile phone, a video phone, an e-book reader, a desktop PC, a laptop PC, a netbook computer, a personal digital assistant (PDA), a portable multimedia player (PMP), a Moving Picture Experts Group phase 1 or phase 2 (MPEG-1 or MPEG-2) audio layer 3 (MP3) player, a portable medical device, a digital camera, or a wearable device (e.g., a head-mounted device (HMD) such as electronic glasses, electronic clothes, an electronic bracelet, an electronic necklace, an electronic accessory, an electronic tattoo, a smart mirror, or a smart watch).

According to some embodiments, an electronic device may be a smart home appliance that involves a communication function. For example, an electronic device may be a television (TV), a digital versatile disc (DVD) player, audio equipment, a refrigerator, an air conditioner, a vacuum cleaner, an oven, a microwave, a washing machine, an air cleaner, a set-top box, a TV box (e.g., Samsung HomeSync^{™}, Apple TV^{™}, Google TV^{™}, etc.), a game console, an electronic dictionary, an electronic key, a camcorder, or an electronic picture frame.

According to another embodiment, the electronic device may include at least one of various medical devices (e.g., various portable medical measuring devices (a blood glucose monitoring device, a heart rate monitoring device, a blood pressure measuring device, a body temperature measuring device, etc.), a magnetic resonance angiography (MRA), a MR imaging (MRI), a computed tomography (CT) machine, and an ultrasonic machine), a navigation device, a global positioning system (GPS) receiver, an event data recorder (EDR), a flight DR (FDR), a vehicle infotainment devices, an electronic devices for a ship (e.g., a navigation device for a ship, and a gyro-compass), avionics, security devices, an automotive head unit, a robot for home or industry, an automatic teller's machine (ATM) in banks, point of sales (POS) in a shop, or internet device of things (e.g., a light bulb, various sensors, electric or gas meter, a sprinkler device, a fire alarm, a thermostat, a streetlamp, a toaster, a sporting goods, a hot water tank, a heater, a boiler, etc.)

According to some embodiments, an electronic device may be furniture or part of a building or construction having a communication function, an electronic board, an electronic signature receiving device, a projector, or various measuring instruments (e.g., a water meter, an electric meter, a gas meter, a wave meter, etc.). An electronic device disclosed herein may be one of the above-mentioned devices or any combination thereof.

Hereinafter, an electronic device according to various embodiments will be described with reference to the accompanying drawings. As used herein, the term "user" may indicate a person who uses an electronic device or a device (e.g., an artificial intelligence electronic device) that uses an electronic device.

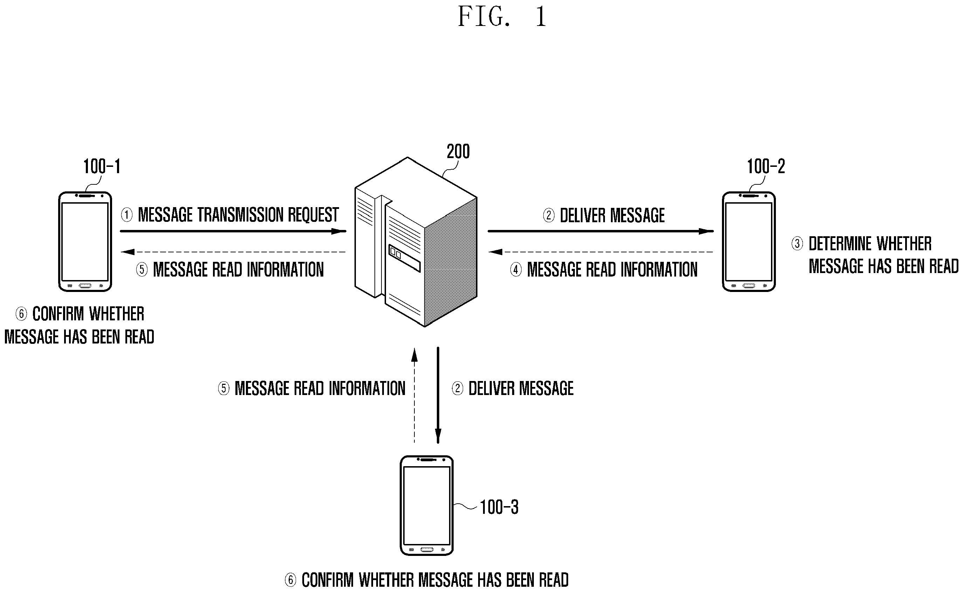

FIG. 1 illustrates a network environment to provide a message service according to an embodiment of the present disclosure.

The network environment to provide the message service according to the embodiment may include a first electronic device 100-1 that sends a message, a second electronic device 100-2 and a third electronic device 100-3 that receive a message, and a server 200 that serves as a relay between the electronic devices 100-1, 100-2, and 100-3. The same messenger application may be installed in each of the electronic devices 100-1,100-2, and 100-3. For example, users may send a message or may check a received message through the messenger applications installed in the electronic devices 100-1, 100-2, and 100-3.

Referring to FIG. 1, the first electronic device 100-1 may send a message input by a user to the second electronic device 100-2 through a server 200. According to one embodiment, the second electronic device 100-2 may determine whether the received message has been read by a user of the second electronic device 100-2. For example, when there is a plurality of received messages, the second electronic device 100-2 may run the application for processing a message and may provide a chat room screen including a first unread message and a second unread message through the running application.

The second electronic device 100-2 may process message read confirmation of the first unread message at a first time and may process message read confirmation of the second unread message at a second time that is different from the first time. For example, the second electronic device 100-2 may process the message read confirmation of the first unread message at the first time and may process the message read confirmation of the second unread message at the second time that is different from the first time, based on times since the first unread message and the second unread message are displayed on a screen.

When it is confirmed whether the first unread message and the second unread message are read, the second electronic device 100-2 may transmit message read information indicating a message read status or message unread status to the first electronic device 100-1 through the server 200.

The first electronic device 100-1, which receives the message read information, may provide, through a screen, whether the sent message has been read by a recipient. For example, the first electronic device 100-1 may display times at which the first unread message and the second unread message are processed as read. Accordingly, the user may confirm whether the message sent by the user has been read by the recipient.

In the present disclosure, descriptions of the respective electronic devices 100-1, 100-2, and 100-3 may correspond to an electronic device 100, and the electronic device 100 may be defined as a client terminal or user terminal.

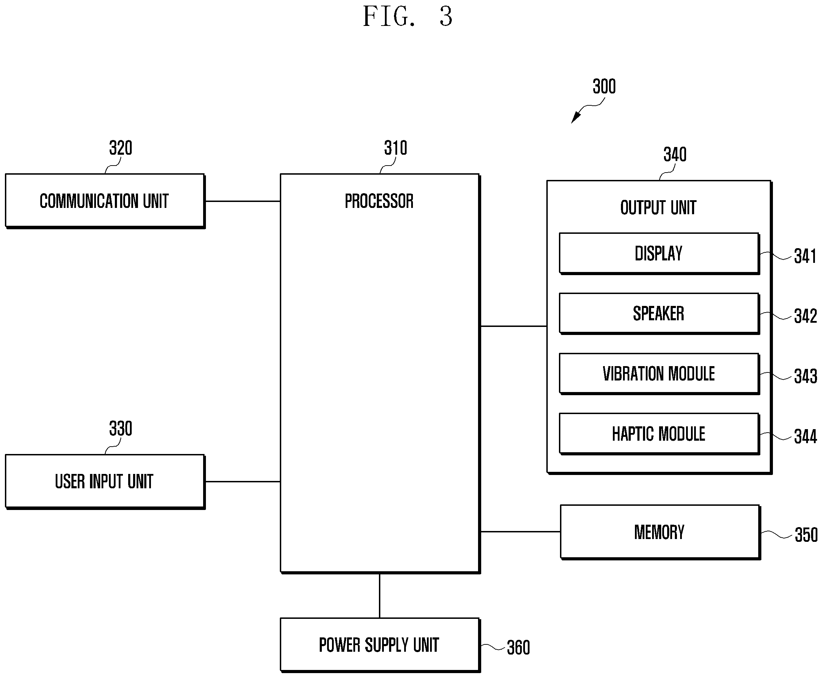

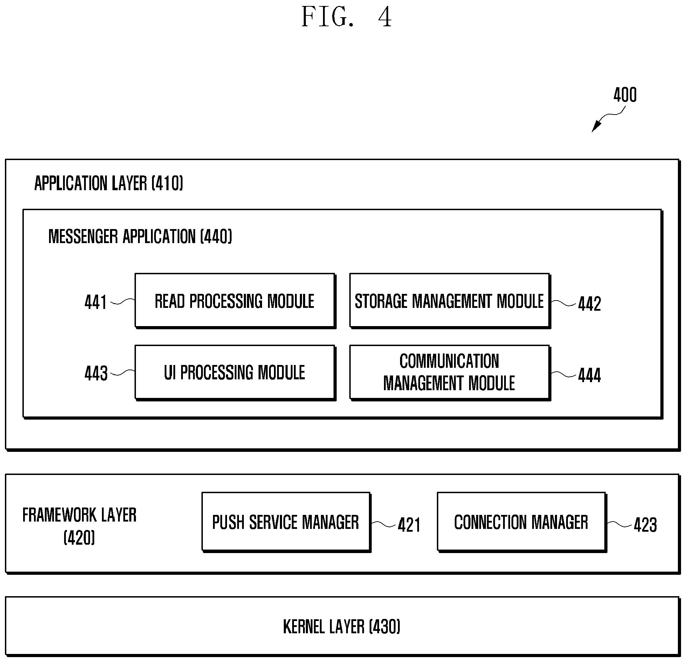

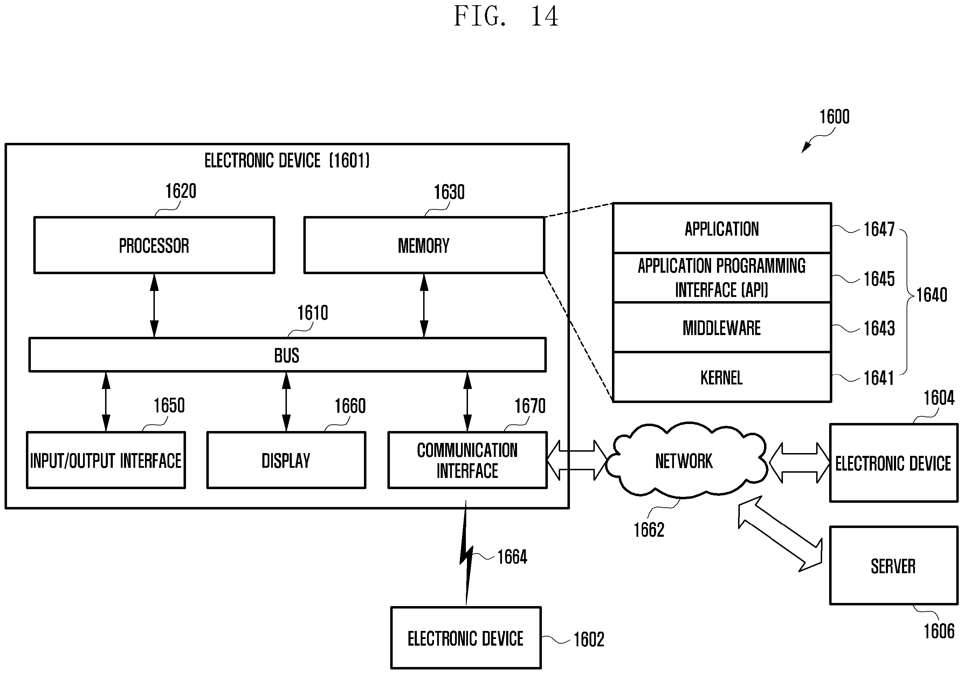

A hardware configuration of the electronic device 100 is illustrated in FIG. 3, and a software configuration thereof is illustrated in FIG. 4. Further, extended embodiments of hardware and software of an electronic device are described with reference to FIGS. 14, 15, and 16.

The network environment of FIG. 1 may include a cable or wireless network that connects the server 200 and the electronic devices 100-1, 100-2, and 100-3. Various examples of the cable or wireless network are described with reference to FIG. 14.

Although FIG. 1 illustrates the network environment including the server 200 and the electronic devices 100-1, 100-2, and 100-3, the network environment is not limited to such a configuration. For example, the server 200 may not be included depending on an application and it may be confirmed whether a message has been read using peer-to-peer (P2P) communications between the electronic devices 100-1, 100-2, and 100-3.

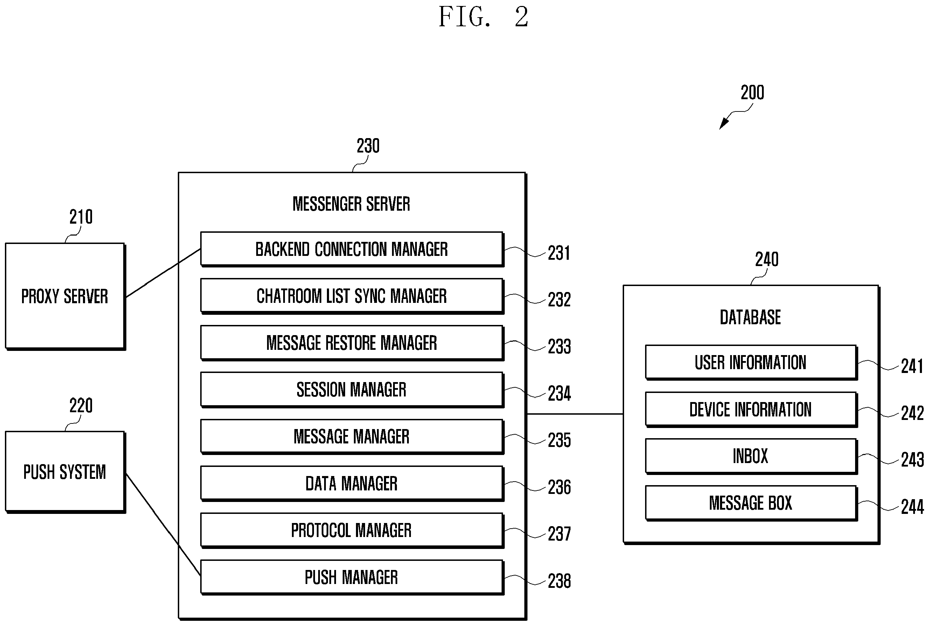

FIG. 2 is a block diagram illustrating components of the server 200 according to an embodiment of the present disclosure.

Referring to FIG. 2, the server 200 may include at least one of a proxy server (PS) 210, a push system 220, and a messenger server 230. In one embodiment, the PS 210 and the push system 220 may form part of the messenger server 230 or may be configured as separate servers. According to one embodiment, the electronic device 100 may be connected to the messenger server 230 through a network. The network includes a cable or wireless network that connects the server 200 and the electronic device 100. Various examples of the cable or wireless network are described with reference to FIG. 14.

The PS 210 may serve to manage a transmission control protocol (TCP) connection with the electronic device 100. For example, the PS 210 may periodically exchange keep-alive messages with the electronic device 100 to manage the TCP connection or may serve as a relay for data transmission and reception between the electronic device 100 and the messenger server 230. Further, the PS 210 may function to transmit a TCP connection establishment/disconnection event with the electronic device 100 to other servers (for example, the messenger server 230) connected to the PS 210. According to one embodiment, the electronic device 100 and the messenger server 230 may be directly connected to each other via a network without the PS 210. Further, the PS 210 may be included as one component of the messenger server 230. Further, the PS 210 may be configured with a plurality of servers.

The push system 220 or push server 220 is a system that provides a push service, such as Google Cloud Messaging (GCM), Samsung Push Platform (SPP), or Apple Push Notification Service (APNS). The push system 220 may use the plurality of services or may be configured with a plurality of servers.

The messenger server 230 may perform functions associated with a chat room and message processing. The messenger server 230 may create a chat room, may manage a chat room, and may transmit/receive a message in connection with various kinds of infrastructure systems located internally/externally (for example, a relational data base (RDB), a No-SQL (non-structured query language), and the push system 220). For example, the messenger server 230 may perform chat room lifecycle management and chat participant management functions (for example, creating a chat room, deleting a chat room, invitation, entrance, exit, expulsion, delegation of host's authority, or changing a host). Further, the messenger server 230 may perform a function of delivering a message to chat members (for example, real-time transmission, message storing, recovery, and delivering functions). In addition, the messenger server 230 may receive various kinds of events associated with user accounts and user terminals of chat members and may process an event (for example, leaving an account, changing a terminal attribute, terminal registration, and terminal deregistration). Hereinafter, illustrative components of the messenger server 230 are described. In one embodiment, the messenger server 230 may be configured as a separate server.

The messenger server 230 may include at least one of a backend connection manager 231, a chat room list sync manager 232, a message restore manager 233, a session manager 234, a message manager 235, a data manager 236, a protocol manager 237, and a push manager 238.

The backend connection manager 231 may manage a connection between the messenger server 230 and the proxy server (PS) 210.

The chat room list sync manager 232 may function to synchronize a chat room list stored in the messenger server 230 with the electronic device 100 when the electronic device 100 requests chat room synchronization.

The message restore manager 233 may function to recover messages exchanged in a chat room when message recovery is requested from the electronic device 100.

The session manager 234 may define a session for a requested chat room when access to the chat room is needed according to a request for creating a chat room, invitation to a chat room, exit, entrance, chatting, or expulsion. The session manager 234 may manage additional information, such as user account information on members of a chat room in a chatting session and a TCP connection state of each member and may process a request associated with the chatting session.

The message manager 235 may provide an abstraction for a storing operation to a higher component in order to perform an operation of transmitting various kinds of general messages or control messages requested from the electronic device 100 or generated internally in the messenger server 230 to a receiving terminal. For example, when the messenger server 230 processes a request for transmission of a message from the first electronic device 100-1 to the second electronic device 100-2, the message manager 235 may store the message as the message is transmitted to the second electronic device 100-2 via the TCP or push. The message manager 235 may determine whether to store the message in an inbox 243 or to cache the message in an in-memory located in the messenger server 230 depending on a TCP connection state of the second electronic device 100-2. For example, when the receiving terminal is TCP-connected, the message manager 235 may temporarily cache a message in the in-memory, instead of storing a message in the inbox 243 whenever a message is transmitted, and may remove data cached in the in-memory when a receipt confirmation is transmitted from the receiving terminal.

The data manager 236 may serve to access a database, such as a RDB or No-SQL. For example, the data manager 236 may serve to process various kinds of queries requested internally from the messenger server 230.

The protocol manager 237 may serve to process message application programming interfaces (APIs) invoked by the electronic device 100. The message APIs may be APIs associated with chat room creation, entrance to a chat room, chat room deletion, invitation of a new member, message transmission, and message reception. Further, the protocol manager 237 may receive message read information indicating a message read status or message unread status from the second electronic device 100-2 that has received the message and may transmit the message read information to the first electronic device 100-1 that has sent the message. In addition, the protocol manager 237 may transmit the message read information to respective electronic devices 100 of users participating in a chat room. In this case, when electronic devices 100 of some of the users participating in the chat room are disconnected from the server 200, the protocol manager 237 may store the message read information in inboxes 243 of the disconnected electronic devices 100. Further, the protocol manager 237 may request the push system 220 to transmit the message read information.

The push manager 238 may request the push system 220 to transmit a push message when a TCP connection between the electronic device 100 and the proxy server (PS) 210 is broken.

A database 240 may store messenger/message related information. According to one embodiment, the database 240 may be a separate database server connected with the messenger server 230 or may be configured in the messenger server 230. Further, the database 240 may be configured with a plurality of databases.

The database 240 may store or include user information 241, device information 242, the inbox 243, and a message box 244.

Referring to FIG. 2, the user information 241 may include information on a user account registered through a messenger application. The device information 242 may include information on a plurality of devices of each user included in the user information 241. For example, in the messenger server 230, a single device may be registered for one user but a plurality of devices may be registered with the same account for another user.

The inbox 243 may store a message that has been received from the first electronic device 100-1 but has not yet been transmitted to the second electronic device 100-2 to receive the message. For example, the second electronic device 100-2 may be in an off state or may be disconnected from the messenger server 230. In this case, the inbox 243 may temporarily store the message until the second electronic device 100-2 can receive the message. When the second electronic device 100-2 has received the message, the message stored in the inbox 243 may be deleted. Meanwhile, when there is a plurality of second electronic devices 100-2 to receive the message, inboxes corresponding to the respective second electronic devices 100-2 may be present. In this case, to prevent the message received from the first electronic device 100-1 from being stored in a duplicate manner in the inboxes corresponding to the respective second electronic devices 100-2, the common message to be transmitted may be stored in an integrated inbox (not shown). When the message has been transmitted to all of the second electronic devices 100-2, the message stored in the integrated inbox may be deleted.

Further, the inbox 243 may store message read information related to a message, which has been received from the second electronic device 100-2 that has received the message but has not been transmitted to the first electronic device 100-1 to receive the message read information. In this case, when the first electronic device 100-1 has received the message read information, the message read information in the inbox 243 may be deleted. Meanwhile, when a plurality of users participates in a chat room, there may be a plurality of electronic devices 100 to receive the message read information. In this case, to prevent the message read information received from the second electronic device 100-2 from being stored in a duplicate manner in inboxes corresponding to the respective electronic devices 100, the common message read information to be transmitted may be stored in the integrated inbox (not shown). When the message read information has been transmitted to all of the electronic devices 100, the message read information stored in the integrated inbox may be deleted.

The message box (msgbox) 244 may store chatting contents (messages) in a chat room for a message recovery function. The message recovery function may be used depending on a user's intent, may basically be supported for all users, or may be used when a plurality of devices is registered with one user account.

The messenger server 230 illustrated in FIG. 2 is provided for illustrative purposes and may be modified into an appropriate form to achieve embodiments of the present disclosure. For example, some of the components illustrated in FIG. 2 may be omitted or a component obvious to a person skilled in the art may be added. According to one embodiment, the proxy server (PS) 210, the push system 220, the messenger server 230, and the data base 240 may be included in one or more devices. For example, the PS 210 and the push system 220 may be included in one server, and the messenger server 230 and the data base 240 may be included in another server.

Further, at least some of the managers 231 to 238 included in the messenger server 230 may be included in the electronic device 100. For example, the session manager 234 may be included in the electronic device 100, and the other managers 231 to 233 and 235 to 238 may be included in the messenger server 230.

FIG. 3 illustrates a hardware configuration of the electronic device 100 that processes a message according to an embodiment of the present disclosure.

Extended embodiments of the electronic device 100 are described with reference to FIGS. 14, 15, and 16.

The electronic device 100 may include a processor 310, a communication unit 320, a user input unit 330, an output unit 340, a memory 350, and a power supply unit 360.

Referring to FIG. 3, the processor 310 may be, for example, an application processor (AP). In one embodiment, the processor 310 may perform an operation of running/controlling a messenger application that operates in the electronic device 100.

According to one embodiment, when a screen including a first unread message and a second unread message is provided, the processor 310 may process message read confirmation of the first unread message at a first time and may process message read confirmation of the second unread message at a second time that is different from the first time.

In this case, the first time and the second time may be determined based on screen-displayed states of the first unread message and the second unread message, respectively. Alternatively, the first time and the second time may be determined based on a read unit according to the number of at least one of numbers, symbols, letters, words, and sentences included in the first unread message and the second unread message, respectively. Alternatively, the first time and the second time may be determined based on a user's scroll speed on the screen. Alternatively, the first time and the second time may be determined based on the sizes of screen-displayed portions of the first unread message and the second unread message, respectively.

In one embodiment, when times for which the first unread message and the second unread message are displayed on the screen are a threshold or longer, the processor 310 may process the first unread message and the second unread message as read.

In another embodiment, when the scroll speed is less than a threshold, the processor 310 may process the first unread message and the second unread message as read.

In another embodiment, the processor 310 may control a display 341 to display a message that is processed as read and a message that is processed as unread in a distinguishable manner according to the foregoing message read confirmations.

The communication unit 320 may function to receive a message from the server 200 (shown in FIG. 2) or to send a message to the server 200. According to one embodiment, the communication unit 320 may function to receive message read information from the server 200 or to send message read information to the server 200. In addition, the communication unit 320 may exchange data generated in the electronic device 100 with the server 200.

The user input unit 330 may receive a user input from a user. For example, the user input unit 330 may receive a message input by a user through a messenger application execution screen. The user input unit 330 may include, for example, at least one of a physical keyboard, a software input panel (SIP), a touch screen panel (TSP) configured along with the display 341, and a display including a force sensor to measure force.

The output unit 340 may include one or more of the display 341, a speaker 342, a vibration module 343, and a haptic module 344. For example, when a message is received or a chat room invitation notification occurs, the electronic device 100 (100-1, 100-2, or 100-3 shown in FIG. 1) may provide the notification using a sound through the speaker 342 or may generate vibrations in the electronic device 100 using the vibration module 343. Further, the electronic device 100 may provide chatting contents or a visual notification/message of the invitation notification through the display 341. The display 341 may display a screen including a first unread message and a second unread message, and may display a message processed as read and a message processed as unread in a distinguishable manner according to a result of processing message read confirmation.

The memory 350 may store messenger application related data, message contents, user account information, and the like. According to one embodiment, some data may synchronize with data stored in the server 200.

According to one embodiment, the power supply unit 360 may be, for example, a battery or a cable or wireless charging circuit. According to one embodiment, the power supply unit 360 may be directly or indirectly connected to hardware forming the electronic device 100 to supply power.

FIG. 4 illustrates a software configuration 400 of the electronic device 100 that processes a message according to an embodiment of the present disclosure.

Referring to FIG. 4, the software configuration 400 of the electronic device 100 may include an application layer 410, a framework layer 420, and a kernel layer 430.

The framework layer 420 may operate on the kernel layer 430. According to one embodiment, the framework layer 420 may include a push service manager 421 and a connection manager 423. According to one embodiment, the push service manager 421 may perform an operation of processing a push notification of the electronic device 100. For example, when the communication unit 320 receives a push notification from the push system 220 and transmits the received push notification to the push service manager 421 of the framework layer 420, the push service manager 421 may process the push notification. As a result of processing, the push notification may be provided through the output unit 340 according to settings of the electronic device 100.

The connection manager 423 may serve a TCP connection between the electronic device 100 and the proxy server (PS) 210. The connection manager 423 may perform a keep-alive operation to detect a zombie-state channel. Further, the connection manager 423 may serve encryption of a channel itself. Encryption of a channel itself may correspond to encryption of a higher layer immediately above the TCP, such as a secure sockets layer (SSL)/transport layer security (TSL).

A messenger application 440 may operate in the application layer 410. The messenger application 440 may include a read processing module 441, a storage management module 442, a user interface (UI) processing module 443, and a communication management module 444. The modules are examples defined based on functions and may be configured in other forms in one embodiment.

The read processing module 441 may perform an operation of processing message read confirmation. For example, the read processing module 441 may determine whether the user has read a received message. Further, the read processing module 441 may update a reading status of a sent message or may check detailed information on a reading status of a sent message based on message read information. For example, the read processing module 441 may perform the following operations of: 1) checking whether a received message has been read; 2) updating a reading status of a sent message; and 3) checking detailed information on a reading status of a sent message.

### 1) Checking whether a received message has been read

Referring to FIG. 4, the read processing module 441 may determine whether the user has read a received message that is received through the communication unit 320 (shown in FIG. 3). According to one embodiment, the read processing module 441 may determine whether the message has been read based on time since the message is displayed on the screen, whether the message is displayed on the screen, and a scroll speed on the screen by the user. For example, the read processing module 441 may determine whether the message has been read according to the message display time from the time when the screen starts to display the message to the time when the screen finishes displaying the message and whether the display time reaches a threshold. For example, the read processing module 441 may determine whether the message has been read depending on whether the received message is displayed on the screen through the output unit 340 (for example, the display 341 shown in FIG. 3).

The messenger application 440 may determine whether each of the messages has been read. According to one embodiment, when it is determined whether each of the messages has been read, the messenger application 440 may transmit pieces of message read information in real time to the server 200 (shown in FIG. 2) through the communication unit 320. Alternatively, the messenger application 440 may temporarily collect pieces of message read information and may transmit the pieces of message read information at a time to the server 200 through the communication unit 320 when exceeding a threshold number or threshold time. Alternatively, the messenger application 440 may store read information in a designated buffer and may transmit pieces of read information at a time to the server 200 through the communication unit 320 when the designated buffer is full.

### 2) Updating of a reading status of a sent message

When a recipient has read a message sent by the user, the communication unit 320 may receive message read information on the sent message from the server 200. In this case, the read processing module 441 may update a status of the sent message from a message unread status to a message read status based on the message read information. The message read information may include, for example, identification information on the recipient and message read time.

### 3) Checking detailed information on a reading status of a sent message

The user of the electronic device 100 (100-1, 100-2, or 100-3 shown in FIG. 1) may check detailed information on a recipient's reading status of a sent message. For example, when the detailed information on the reading status of the message is requested, the read processing module 441 may display identification information on the recipient who has read the message and message read time on the screen through the display 341 (shown in FIG. 3). Meanwhile, not only the user who has sent the message but also other members participating in a chat room may check the detailed information on the reading status of the message. For example, when message read information is transmitted from electronic devices 100 of some of the members participating in the chat room, the server 200 may transmit the message read information to electronic devices 100 of the other members.

The storage management module 442 may store and manage information related to a chat room in which the user participates. For example, the information related to the chat room may include identification information on the chat room, identification information on a member participating in the chat room, a message displayed in the chat room, message read information indicating whether the user has read a message, and the like. The message read information may include information indicating whether a message has been read (for example, a message read status or message unread status) and message read time. Further, the message read information may include the time at which a message is displayed on the screen, estimated time taken to read a message, and the like.

The UI processing module 443 may perform an operation of processing a UI related to a message. For example, when it is determined that the user has read a message displayed in the chat room, the UI processing module 443 may highlight a speech bubble including the message read by the user, the periphery of the speech bubble, and/or the boundary of the speech bubble (for example, in a different color, in a flickering manner, in a different thickness, and the like). In addition, the UI processing module 443 may display a popup screen to ask whether the threshold time to determine that the user has read a message is appropriate. When the user wishes to adjust the threshold time, the user may access a threshold setup screen through a UI on the popup screen.

According to one embodiment, for the convenience of users, the UI on the popup screen may be displayed only for a certain period of time after the messenger application is installed, and may not be displayed after the certain period of time. Further, the UI processing module 443 may display the time at which the user has read a message.

Further, the UI processing module 443 may highlight a speech bubble including a message read by a recipient in a chat room, the periphery of the speech bubble, and/or the boundary of the speech bubble, or may display the number of recipients who have read a message, based on message read information received from the communication unit 320 (shown in FIG. 3). Further, the UI processing module 443 may also display the time at which a recipient has read a message based on the message read information.

Due to the message-related UI processing operation of the UI processing module 443, a user read message and a user unread message are distinguished from each other, so that the user may miss fewer messages. Further, a recipient read message and a recipient unread message are distinguished from each other, thereby satisfying a request from a user who wishes to know whether a recipient has received a message.

The communication management module 444 may control the communication unit 320 to transmit data to the server 200 and/or to receive data from the server 200 (shown in FIG. 2). For example, the communication management module 444 may control the communication unit 320 to transmit message read information on a message received by the user to the server 200 and to receive message read information on a message sent by the user from the server 200.

According to an embodiment of the present disclosure, the processor 310 may check whether a message is displayed on the screen using a screen control event and a corresponding callback event.

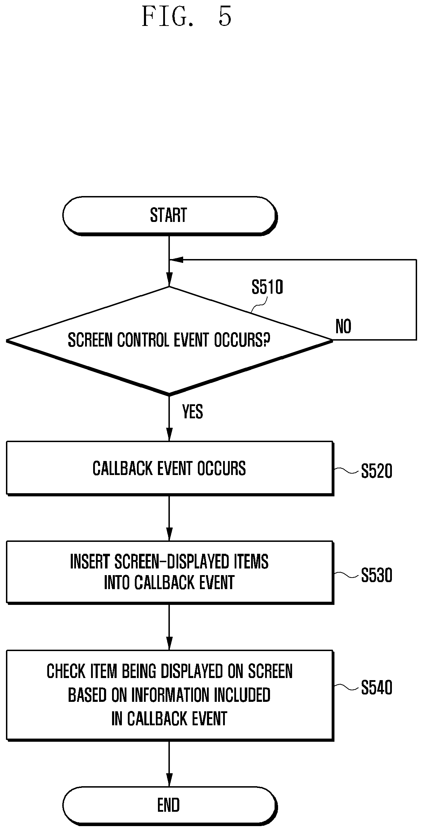

FIG. 5 is a flowchart illustrating a process in which the electronic device 100 checks whether a message is displayed on the screen according to an embodiment of the present disclosure.

Referring to FIG. 5, in operation S510, the electronic device 100 (100-1, 100-2, or 100-3 shown in FIG. 1) (for example, the processor 310 shown in FIG. 3) may determine whether a screen control event occurs. The screen control event may occur, for example, when an application execution screen (for example, a chat room screen) is resized or the user scrolls on the screen. When the screen control event occurs, for example, the number of messages being displayed on the screen or a sender who has sent a message may change. The processor 310 may determine whether a scroll event occurs as an example of the screen control event.

When it is determined that the screen control event occurs, the electronic device 100 (for example, the processor 310) may generate a callback event corresponding to the screen control event in operation S520. When the screen control event is a scroll event, a callback event corresponding to the scroll event may be, for example, an 'on scroll()' event.

In operation S530, the electronic device 100 (for example, the processor 310) may insert items being displayed on the screen into the callback event. For example, identification information on the items being displayed on the screen may be inserted as arguments of the 'on scroll()' event as the callback event.

In operation S540, the electronic device 100 (for example, the processor 310) may check an item that is currently being displayed on the screen based on the information included in the callback event. Accordingly, the processor 310 may check a message currently displayed on the screen. In addition, various methods may be used for the processor 310 to check whether a message is displayed on the screen. In the present disclosure, a message may include a speech bubble including the message. For example, a message displayed or present on the screen may denote a speech bubble including the message. A speech bubble may generally include a tail to indicate a user who inputs a message, while a message of the present disclosure may denote a speech bubble excluding a tail. Alternatively, a message may denote a message text in a speech bubble excluding a graphic forming the speech bubble.

Using the foregoing method for checking whether a message is displayed on the screen, the processor 310 may determine whether the user has read a message.

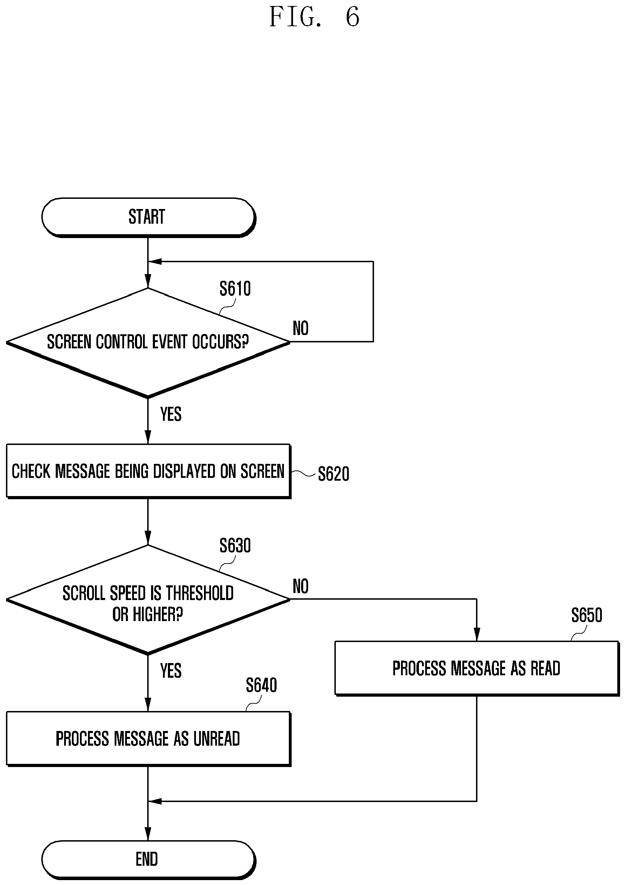

FIGS. 6, 7, and 8 illustrate a process in which the electronic device (for example, the processor 310) processes message read confirmation of an unread message according to various embodiments of the present disclosure.

According to the embodiment, in order to process message read confirmation of an unread message, the electronic device 100 (100-1, 100-2, or 100-3 shown in FIG. 1) (for example, the processor 310) may perform the following operations: 1) using whether a message is displayed on the screen and using scroll speed; 2) by accumulating the display time of a message on the screen; 3) by determining the display time of a message on the screen according to a reading direction; and 4) by accumulating the display time of a message on the screen according to a gaze.

Message read confirmation may be processed using each of the following embodiments or in combination of some or all of the embodiments. In addition, methods for processing message read confirmation of an unread message may not be limited to the embodiments of the present disclosure, but various methods that are obvious to a person skilled in the art may be used or combined with the following embodiments.

### 1) Using whether a message is displayed on a screen and using scroll speed

Referring to FIG. 6, in operation S610, the electronic device 100 (100-1, 100-2, or 100-3 shown in FIG. 1) (for example, the processor 310 shown in FIG. 3) may determine whether a screen control event occurs. The screen control event may occur, for example, when: a screen being displayed is updated according to a user's scrolling; a screen being displayed is switched to a different chat room screen; a screen changes from a portrait mode to a landscape mode, from the landscape mode to the portrait mode, from a single mode to a dual mode, or from the dual mode to the single mode; or a screen off state is switched to a screen on state. Accordingly, the screen may display new messages.

When the screen control event occurs, the electronic device 100 (for example, the processor 310) may check a message displayed on the screen in operation S620. The processor 310 may check the message displayed on the screen according to the process illustrated in FIG. 5. The processor 310, which has checked that the message is displayed, may check whether the message has been read based on the position of the message on the screen or the display status of the message on the screen. For example, when part of the message (for example, an about 25% upper portion of the message or about 25% lower portion of the message) is displayed, the processor 310 may determine that the user has read the message.

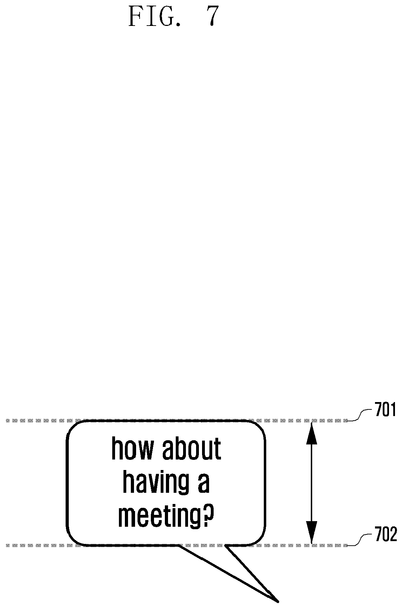

For example, FIG. 7 illustrates an upper start point of a message for determining the display level of a message may be the upper edge 701 of a speech bubble. Further, a lower start point of a message for determining the display level of a message may be the lower edge 702 of the speech bubble excluding a tail of the speech bubble. Further, the processor 310 (shown in FIG. 3) may determine whether a message has been read depending on whether a specific line of the message, which is a baseline, is displayed on the screen. Alternatively, when the central portion of a message is displayed, the processor 310 may determine that the user has read the message.

When the message displayed on the screen is checked, the electronic device 100 (100-1, 100-2, or 100-3 shown in FIG. 1) (for example, the processor 310) may determine whether scroll speed by a scroll event is a threshold or higher in operation S630. Alternatively, the processor 310 may determine whether a scroll event occurs within a predetermined time (for example, one or two seconds) after the screen control event occurs. When the scroll speed is the threshold or higher, the electronic device 100 (for example, the processor 310) may indicate that the user has not read the message in operation S640.

That is, although it is determined based on the display status of the message that the message has been read in operation S620, if the scroll event occurs within the predetermined time after the screen control event occurs, the electronic device 100 (for example, the processor 310) may determine that the message has not been read by the user. On the contrary, when the scroll speed is less than the threshold, the electronic device 100 (for example, the processor 310) may determine that the user has read the message in operation S650.

In determining whether the scroll speed is the threshold or higher, the threshold may change depending on the screen size of the electronic device 100 (100-1, 100-2, or 100-3 shown in FIG. 1) (for example, the processor 310 shown in FIG. 3) or the resolution of the screen. For example, when the electronic device 100 has a screen size to display a text of 30 lines and each line includes about six to eight English words, the threshold may be about 15 lines/sec. That is, when scrolling is performed at a speed lower than the threshold, it may be determined that the user can read all lines of a message displayed on the screen. Further, when scrolling is performed at the threshold or higher, it may be determined that the user cannot read and misses a message displayed on the screen.

Referring to FIG. 6, operation S620 may follow operation S630, and operations S620 and operation S630 may be performed almost at the same time. For example, the processor 310 may determine whether the scroll speed is the threshold or higher, and may check the display status of a message being displayed on the screen when the scroll speed is less than the threshold.

### 2) Accumulating display time of a message on a screen

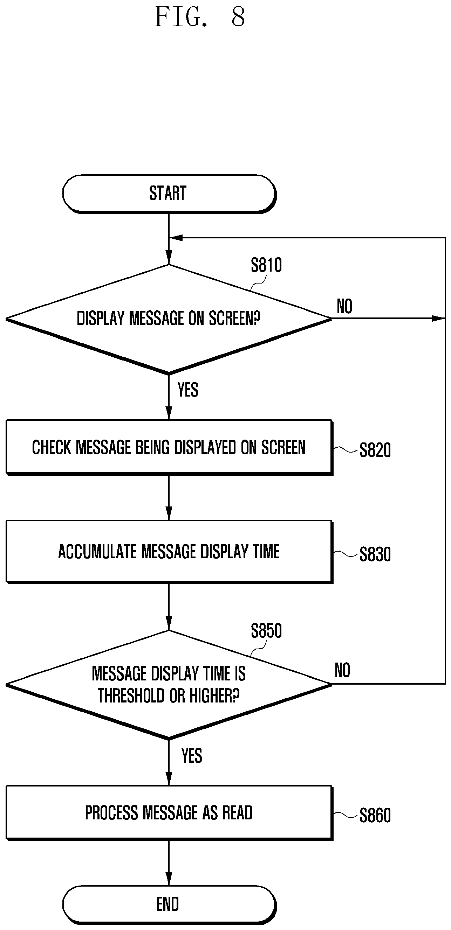

Referring to FIG. 8, in operation S810, the electronic device 100 (for example, the processor 310) may determine whether a message is being displayed on the screen. When it is determined that the message is being displayed on the screen, the electronic device 100 (for example, the processor 310) may check the message displayed on the screen in operation S820. The processor 310 may check the message displayed on the screen according to the process illustrated in FIG. 5. In this case, when a plurality of messages is displayed on the screen, the processor 310 may operate a timer for each of the messages.

When the message is displayed on the screen, the electronic device 100 (for example, the processor 310) may measure and accumulate time for which the message is displayed. That is, the processor 310 may measure the time elapsed since the message was displayed. The processor 310 may determine that the message is displayed, even though a portion of the message is displayed, and may measure the time for which the message is displayed. When there is a plurality of messages, the processor 310 may measure and store the time for which each message is displayed.

Meanwhile, prior to operation S830, the electronic device 100 (for example, the processor 310) may further perform an operation of determining whether the displayed message is a previously read message. In this case, when it is determined that the displayed message is a previously read message, the electronic device 100 (for example, the processor 310) may omit to measure time for which the message is displayed. On the contrary, when it is determined that the displayed message is an unread message, the electronic device 100 (for example, the processor 310) may measure and accumulate time for which the message is displayed in operation S830.

In operation S850, the electronic device 100 (for example, the processor 310) may determine whether the message display time is a threshold or longer. The threshold may be a predetermined value or may be determined based on the length of a message text. For example, the threshold may increase with a longer message text, while the threshold may decrease with a shorter message text.

When the message display time is the threshold (meets the threshold) or longer (exceeds the threshold), the electronic device 100 (for example, the processor 310) may determine that the displayed message is a read message in operation S860. However, when the message display time is less than the threshold, the electronic device 100 (for example, the processor 310) may determine whether the message, which has been displayed, is being displayed again.

When a previously displayed message is displayed again, the electronic device 100 (for example, the processor 310) may measure and accumulate the time for which the message is previously displayed and the time for which the message is displayed again. Accordingly, when the accumulated display time of the message is the threshold or longer, the processor 310 may determine that the displayed message is a read message.

When there is a plurality of messages, the processor 310 may determine the accumulated display time of each message is the threshold or longer and may determine that a message with the accumulated display time that is the threshold or longer among the messages is a read message.

### 3) Determining display time of a message on a screen according to a reading direction

When the user reads a plurality of messages displayed on the screen, the user may generally read the messages from top to bottom. Further, when reading the text of one message, the user may generally read the text of the message from top to bottom. In this case, the display time of a message on the screen may be determined in view of a manner in which the user reads messages. That is, the display time of a message on the screen based on the time elapsed since the message was displayed on the screen may be determined in view of a manner in which the user reads messages.

According to one embodiment, the processor 310 (shown in FIG. 3) may perform the following operations based on: (1) a first message display time accumulation method; and (2) a second message display time accumulation method in order to process the display time of a message on the screen.

The following are various embodiments of accumulating message display times in view of a user's reading direction. Message display times may be accumulated using each of the embodiments or in combination of some or all of the embodiments. In addition, methods for accumulating message display times may not be limited to the embodiments of the present disclosure, but various methods that are obvious to a person skilled in the art may be used or combined with the following embodiments.

### (1) First message display time accumulation method

In one embodiment, when a message is received, the processor 310 may store the received message in the memory 350. The processor 310 may determine estimated message reading time (T) that is taken for the user to read the message based on the number of at least one of numbers, symbols, letters, words, and sentences included in the message, the length of the message, or the number of lines in the message.

For example, when the message is received, the processor 310 may initialize message display time (t) for which the message is displayed on the screen to '0.'

As the time in which the message is displayed on the screen passes, the processor 310 (shown in FIG. 3) may measure the message display time (t) using a timer. According to one embodiment, the processor 310 may control the message display time (t) not to exceed the estimated message reading time (T).

When only a portion of the message is displayed, the processor 310 may update the message display time (t), excluding a non-displayed portion of the message. For example, the processor 310 may control the message display time (t) not to exceed 'the estimated message reading time (T) x the ratio (R) of a displayed portion of the message on the screen.'

For example, the ratio (R) of a displayed portion of the message on the screen may be the ratio of an actually displayed portion of the message on a chat room screen to the entire portion of the message that can be displayed on the chat room screen. For example, only 30% of the entire speech bubble including the message may be displayed on a lower part of the screen. In this case, the processor 310 may control the message display time (t) not to exceed 'the estimated message reading time (T) x 0.3.' In another example, the size of the message may be greater than the chat room screen. In this case, although a portion of the message is displayed on the chat room screen at first, a portion of the message may occupy the entire chat room screen as the message is read. In this case, the ratio (R) of a displayed portion of the message on the screen may be the ratio of an actually displayed portion of the message on the chat room screen to the entire portion of the message. According to one embodiment, the processor 310 may determine estimated message reading time (T) for a character of an emoticon in the text of the message to be different from that for the text including characters of letters or numbers. For example, the processor 310 may assign shorter estimated message reading time (T) for a character of an emoticon than estimated message reading time (T) for characters of letters or numbers.

Meanwhile, when a chat room screen is updated as a screen control event occurs, for example, the user stops scrolling, a screen is switched to a chat room screen, or a screen update event occurs during screen scrolling, the processor 310 may perform an initialization process of selecting a display time tracking target message. Further, the processor 310 may also perform an initialization process of selecting a display time tracking target message when a screen update event occurs by screen scrolling. In addition, the processor 310 may initialize a timer to measure display time.

For example, when a chat room screen stops or moves by scrolling up or down on the screen, the processor 310 (shown in FIG. 3) may determine a first message displayed at the top of the chat room screen as a target message for starting to track the display time. According to one embodiment, when only a lower portion of the first message is displayed at the top of the chat room screen, the processor 310 may determine a next second message as a target message for starting to track the display time. Further, when it is determined that a message for starting to track the display time has already been read by the user, the processor 310 may determine a next message as a target message for starting to track the display time.

When the target message is determined, the processor 310 may track the display times of messages from the target message for starting to track the display time. For example, the time for which the target message is displayed on the screen in a screen on state may be accumulated into message display time (t) of the target message. In this case, since the message display times (t) of messages are sequentially determined in view of a user's reading direction, the processor 310 may operate one timer for one target message to accumulate the message display times (t) into the message display time (t) of the target message.

In this case, the processor 310 may assume that the time for the user to read a tick, which is defined as a unit, is 200 ms and may accumulate 200 ms whenever read confirmation of a tick expires, thereby determining message display time (t) of a message. A tick may be determined based on the number of at least one of numbers, symbols, letters, words, and sentences included in a message. In the present disclosure, for the convenience of description, it is assumed that one tick includes four characters. In another example, the processor 310 may calculate the number of unread ticks of a target message in advance and may estimate the message display time (t) based on the number of unread ticks. The present disclosure illustrates a method of gradually accumulating the message display time (t) on the basis of a tick by operating a timer. Methods of accumulating the message display time according to various embodiments of the present disclosure are not limited thereto but may be modified variously.

As the message display time (t) continues to accumulate, the processor 310 (shown in FIG. 3) may periodically check whether the message display time (t) reaches the estimated message reading time (T). When the message display time (t) reaches the estimated message reading time (T), the processor 310 may determine that the message has been read. Accordingly, the processor 310 may update a UI related to the message on the chat room screen according to pieces of information (for example, read time and the like) related to a message read status. Further, the processor 310 may transmit message read information to the server 200 through the communication unit 320.

When it is determined that the target message has been read by the user, the processor 310 may sequentially reset a next message as a target message for tracking the message display time (t). A direction in which the processor 310 tracks display times of messages may be, for example, a top-to-bottom direction or a left-to-right direction.

Meanwhile, the processor 310 may not track the message display time in a specific condition. For example, when the screen displays no message, such as when the screen is switched from on to off or a chat room screen is switched to another screen, the processor 310 may not track the message display time. Also, the processor 310 may not track the display time of a message, which is determined to have been read. In addition, when a virtual keypad for user input is displayed on a chat room screen, the processor 310 may also not track the display time of a message displayed on the chat room screen. For example, when the virtual keypad is displayed at the same time as a message is displayed on the screen, the time for which the virtual keypad is displayed may be excluded from display time of the message.

### (2) Second message display time accumulation method

In another embodiment, when it is confirmed that the entire portion of a message is displayed based on the message display time (t) and a displayed portion of a message, the processor 310 may determine that the message has been read.

When a message is received, the processor 310 may determine estimated message reading time (T) that is taken for the user to read the message based on at least one of: the number of at least one of numbers, symbols, letters, words, and sentences included in the message; the length of the message; and the number of lines in the message. For example, the processor 310 may define a read unit, which is time taken for the user to read a tick, as tick duration and may estimate the time taken to read a message based on the number of ticks included in the message. Tick duration may be, for example, a period of 0.2 to 0.4 seconds. For instance, assuming that the user reads 180 words displayed on the screen for one minute, tick duration t may be 60 seconds/180 = 0.33 seconds. Assuming that the user has a delay time in reading a word which corresponds to about 50 words due to a space between messages, tick duration t may be 60 seconds/230 = 0.26 seconds.

The processor 310 may assign a tick array according to the number of ticks for each message. A tick array may be defined as a data structure in which a message area displayed so far on the screen is divided by the time.

In one embodiment, the processor 310 may perform an initialization process of setting the size of a message display area displayed on the screen as a reference divided in a tick array. For example, when a target message for starting to track the display time has a tick array size of 200 and a portion of the message that is a portion from 20 tick to 120 tick is displayed on the screen, the processor 310 may set a message display area to {20, 120}. Also, when the target message has a tick array size of 5 and 40% of the target message is disposed on a lower part of the screen, the processor 310 may set a message display area to {0, 2}.

Accordingly, when tick duration of a message displayed on the screen sequentially expires and, thus, the message display time is completely accumulated, tracking the display time of a message may be finished. For example, only part of the slots of a tick array may be displayed on the screen. In this case, the processor 310 may continue to accumulate the message display time as another part of the slots of the tick array is displayed on the screen. When it is confirmed that all tick arrays for the message are displayed, the processor 310 may determine that the message has been read. Next, the processor 310 may perform an initialization process of selecting a new display time tracking target message in order to select a next target message.

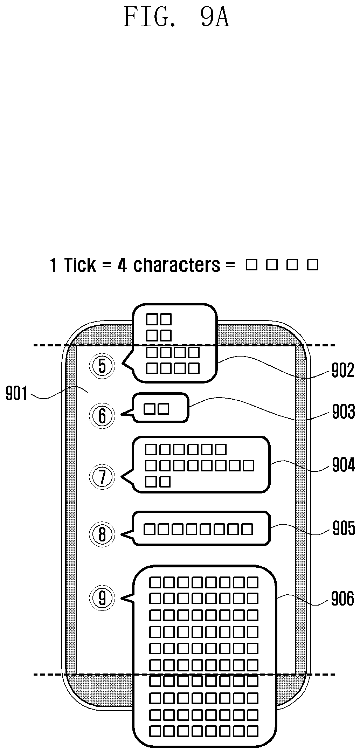

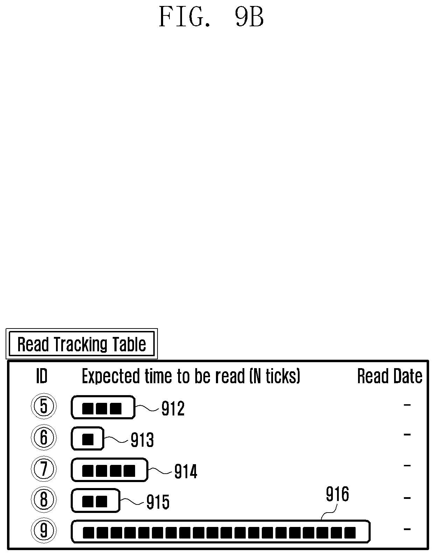

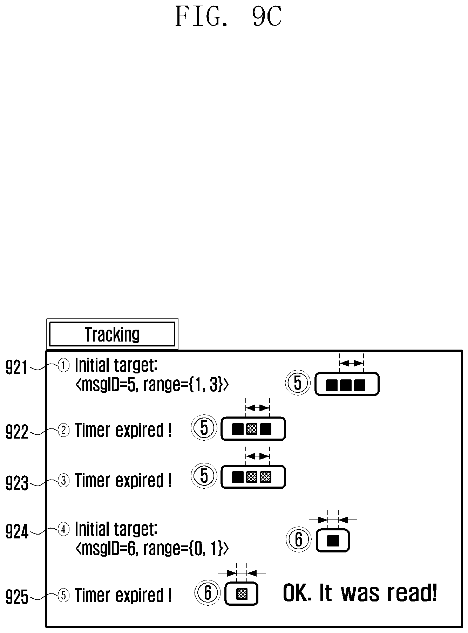

FIGS. 9A, 9B, and 9C illustrate drawings for conceptually describing a process of determining whether a message has been read using message display time and information on a message display area according to an embodiment of the present disclosure.

Referring to FIG. 9A, a screen 901 may partly or entirely display a plurality of messages 902, 903, 904, 905, and 906. In FIG. 9A, characters included in the messages may be represented by '□,' and one tick may be defined by four characters. In this case, as in FIG. 9B, each of the messages 902, 903, 904, 905, and 906 may be defined as a tick array having at least one slot, one tick duration being defined as one slot. For example, a message 902 may be defined as a tick array 912 including three slots, a message 903 as a tick array 913 including one slot, a message 904 as a tick array 914 including four slots, a message 905 as a tick array 915 including two slots, and a message 906 as a tick array 916 including 20 slots.

In FIG. 9C, the processor 310 may determine whether each of the messages 902, 903, 904, 905, and 906 has been read.

The processor 310 may determine whether the messages have been read in a downward direction from the message at the top among the messages displayed on the screen. For example, referring to 921 in FIG. 9C, the processor 310 may determine a fifth message disposed at the top as an initial target message and may determine a first slot of a tick array displayed on the screen in tick array {1, 3} as a target for accumulating the message display time. Next, referring to 922 in FIG. 9C, when tick duration expires according to an operation of a timer, the processor 310 may process the first slot as read. Next, referring to 923 in FIG. 9C, when next tick duration expires according to an operation of a timer, the processor 310 may process a second slot as read. In this case, since a zeroth slot of the initial target message is not yet displayed, the processor 310 may determine that the fifth message as the initial target message has not been read.

When it is determined that the initial target message has been read, the processor 310 may change a target message to a message disposed below the initial target message. For example, referring to 924 in FIG. 9C, the processor 310 may determine a sixth message disposed below the fifth message as a target message and may determine a zeroth slot of a tick array displayed on the screen as a target for accumulating message display time. Next, referring to 925 in FIG. 9C, when tick duration expires according to an operation of a timer, the processor 310 may process the zeroth slot as read. Accordingly, every slot of the sixth message as the target message is processed as read, and the processor 310 may determine that the sixth message has been read.

### 4) Accumulating display time of a message on a screen according to a gaze

In one embodiment, the processor 310 may process message read confirmation based on a gaze of the user at the screen. For example, the processor 310 may track a gaze of the user to determine whether the user looks at the screen, to determine a message at which the user gazes among a plurality of messages, or to determine a position, a character, or a line at which the user gazes in the text of a message. To this end, the processor 310 may predict coordinates at which the user gazes using a front camera or an iris sensor of the electronic device 100.

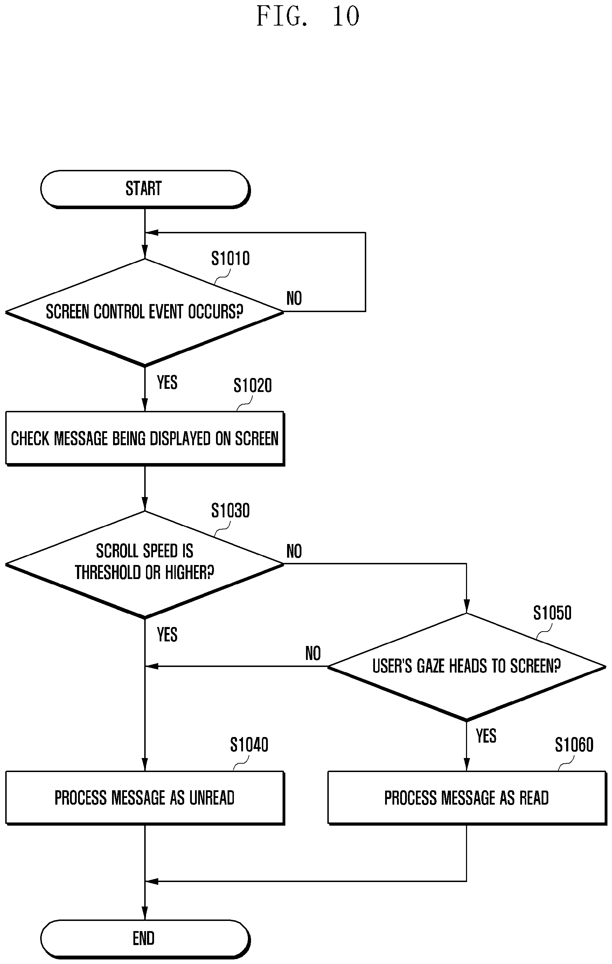

FIG. 10 is a flowchart illustrating a process in which the electronic device 100 processes message read confirmation based on a gaze according to an embodiment of the present disclosure.

Referring to FIG. 10, in operation S1010, the electronic device 100 (100-1, 100-2, or 100-3 shown in FIG. 1) (for example, the processor 310 shown in FIG. 3) may determine whether a screen control event occurs. The screen control event may be, for example, a scroll event that occurs by user's scrolling. Accordingly, new messages may be displayed on the screen.

When the screen control event occurs, the electronic device 100 (for example, the processor 310) may check a message being displayed on the screen in operation S1020. The processor 310 may check the message being displayed on the screen according to the process illustrated in FIG. 5.

In operation S1030, the electronic device 100 (for example, the processor 310) may determine whether scroll speed by the scroll event is a threshold or higher. When the scroll speed is the threshold or higher, the electronic device 100 (for example, the processor 310) may determine that the user has not read the message in operation S1040.

Alternatively, when the scroll speed is less than the threshold, the electronic device 100 (for example, the processor 310) may determine whether a gaze of the user heads to the screen in operation S1050. As a result, when the gaze of the user heads to the screen, the electronic device 100 (for example, the processor 310) may process at least one message being displayed on the screen as a read message in operation S1060. However, when the gaze of the user does not head to the screen, the electronic device 100 (for example, the processor 310) may process the message as an unread message as in operation 1040.

In FIG. 10, operation S1020 may follow operation S1030, operation S1020 and operation S1030 may be performed almost at the same time. For example, the electronic device 100 (for example, the processor 310) may determine whether the scroll speed is the threshold or higher, and may check the display status of a message on the screen when the scroll speed is less than the threshold.

In another embodiment, the processor 310 may process read confirmation of a message based on a gaze of the user at the screen.

For example, the processor 310 may determine whether a screen control event occurs. The screen control event may be, for example, a scroll event that occurs by a user's scrolling. Accordingly, new messages may be displayed on the screen.

In this case, the processor 310 may determine whether a gaze of the user heads to the screen. As a result, when the gaze of the user heads to the screen, the processor 310 may process at least one message being displayed on the screen as a read message. However, when the gaze of the user does not head to the screen, the processor 310 may process the message as an unread message as in operation S1040.

When it is determined whether a message has been read, the processor 310 may provide a UI to confirm whether each of messages has been read.

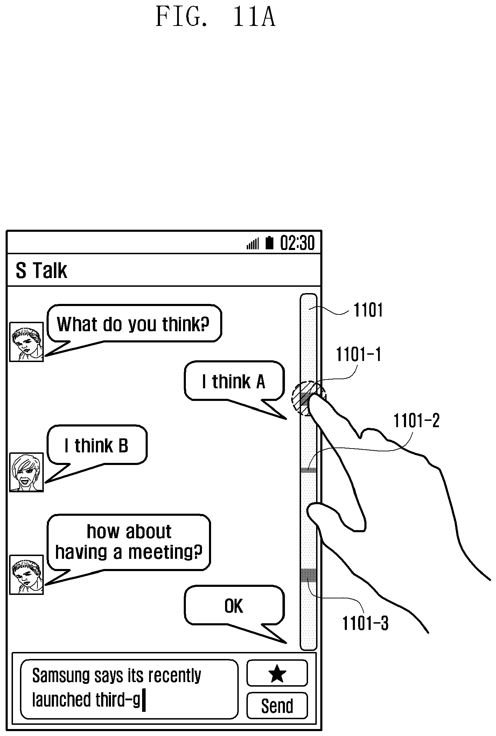

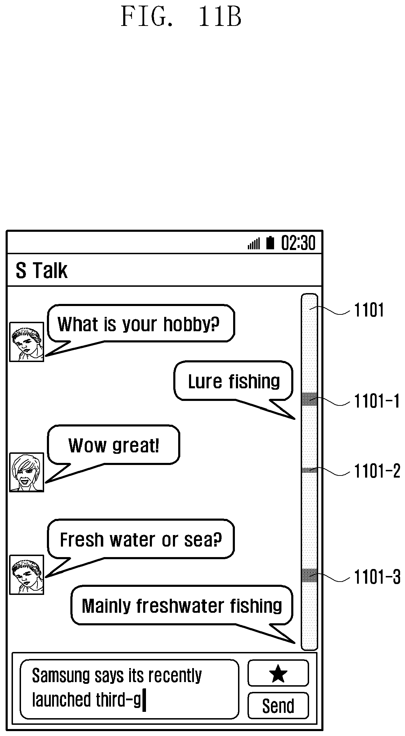

For example, FIGS. 11A and 11 B illustrate a UI indicating whether the user has read a message received by the electronic device 100 according to an embodiment of the present disclosure.

Referring to FIG. 11A, a bar 1101 corresponding to the number or quantity of messages provided through a chat room is displayed on one side of the screen. The bar 1101 may display identifiers 1101-1, 1101-2, and 1101-3 corresponding to positions of messages unread by the user among the messages provided through the chat room. The identifiers 1101-1, 1101-2, and 1101-3 may be marked with a specific band on the bar 1101 or with a character, image, or identification information (for example, a character, an image, or the like) on a sender who has sent an unread message. In this case, the identifiers 1101-1, 1101-2, and 1101-3 have different widths, in which the identifiers 1101-1, 1101-2, and 1101-3 with a greater width indicate a larger number of unread messages at corresponding positions.

The user input unit 330 (shown in FIG. 3) may receive a user input of selecting one identifier 1101-1 among the identifiers 1101-1, 1101-2, and 1101-3 corresponding to the positions of the messages. As illustrated in FIG. 11B, the processor 310 may control the display 341 (shown in FIG. 3) to display a screen including a message corresponding to the identifier 1101-1 according to the user input. For example, the processor 310 may provide a screen that displays the message along with at least part of a message received before or after the time when the message is provided in the chat room. Further, the processor 310 may control the display 341 to display only messages unread by the user in one divided area of the screen.

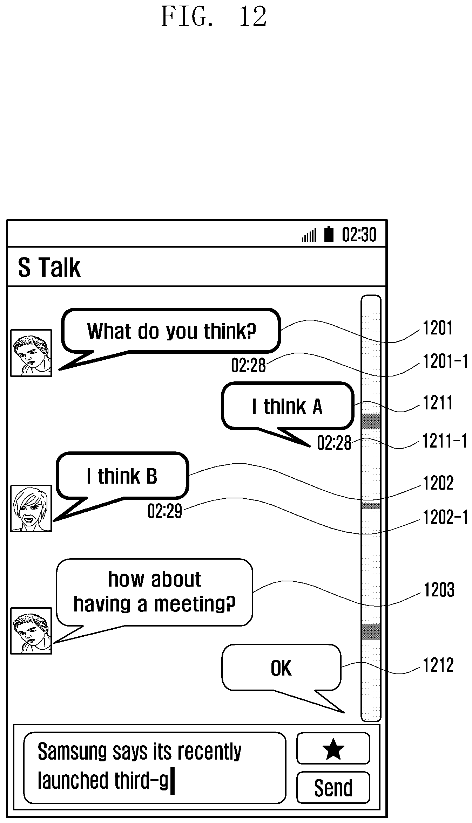

For another example, FIG. 12 illustrates a UI indicating whether a recipient has read a message sent by the electronic device 100 according to an embodiment of the present disclosure.

Referring to FIG. 12, a screen may display messages 1201, 1202, and 1203 sent by the recipient and messages 1211 and 1212 sent by the user. In this case, messages 1201 and 1202 that are processed as read among the messages 1201, 1202, and 1203 sent by the recipient may be displayed to be distinguished from the other message 1203. For example, the messages 1201 and 1202 that are processed as read may be highlighted, or times 1201-1 and 1202-1 the messages 1201 and 1202 have been processed as read may be shown around the messages 1201 and 1202 that are processed as read.

Meanwhile, the processor 310 (shown in FIG. 3) may receive, from the server 200 (shown in FIG. 2) through the communication unit 320, message read information indicating that the recipient has read the messages 1211 and 1212 sent by the user. The message read information may include information on the recipient who has read the messages and the time the messages have been read. The processor 310 may control the display 341 to display a recipient read message 1211 and a recipient unread message 1212 in a distinguishable manner based on the message read information. For example, the recipient read message 1211 may be highlighted, or time 1211-1 the recipient read message 1211 has been read may be shown around the recipient read message 1211. When there is a plurality of recipient read messages, the respective messages may have been read at different times. For example, if the recipient sequentially reads the messages from top to bottom, a message disposed at the top of the screen may have been read at the earliest time and a message disposed at the bottom of the screen may have been read at the latest time.

In another embodiment, the processor 310 may further perform an additional function associated with a message that is confirmed to have been read among messages. For example, when it is confirmed that a specific message has been read, the processor 310 may register a scheduling function so that an additional message associated with the specific message is automatically transmitted to the recipient. This additional message transmission function may be highly useful to determine whether messages related to the security of a recipient, such as emergency/important messages and financial transaction-related messages, have been read.

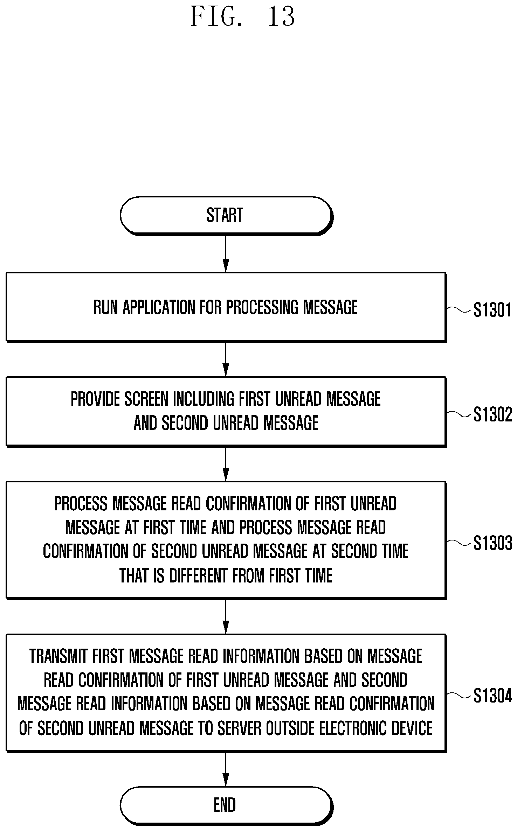

FIG. 13 is a flowchart illustrating a message processing operation of the electronic device 100 according to an embodiment of the present disclosure.

Referring to FIG. 13, in operation S1301, the electronic device 100 (100-1, 100-2, or 100-3 shown in FIG. 1) (for example, the processor 310 shown in FIG. 3) may run an application for processing a message.

In operation S1302, the electronic device 100 (for example, the processor 310) may provide a screen including a first unread message and a second unread message, which are messages processed as unread.

In operation S1303, the electronic device 100 (for example, the processor 310) may process message read confirmation of the first unread message at a first time and may process message read confirmation of the second unread message at a second time that is different from the first time.

In this case, the first time and the second time may be determined based on screen-displayed states of the first unread message and the second unread message, respectively.

For example, the first time and the second time may be determined based on times for which the first unread message and the second unread message are displayed on the screen. Alternatively, the first time and the second time may be determined based on the sizes of screen-displayed portions of the first unread message and the second unread message. For example, when times for which the first unread message and the second unread message are displayed on the screen are a threshold or longer, the electronic device 100 may process the first unread message and the second unread message as read. Here, when the electronic device 100 determines that the user does not gaze at the messages, for example, when a virtual keypad is displayed on the screen, the time for which the virtual keypad is displayed may be excluded from the times for which the first unread message and the second unread message are displayed on the screen.

Further, the first time and the second time may be determined based on user's scroll speed on the screen after the first unread message and the second unread message are displayed on the screen. For example, when the scroll speed is less than a threshold, the electronic device 100 may process the first unread message and the second unread message as read.

In operation S1304, the electronic device 100 (for example, the processor 310) may transmit first message read information based on the message read confirmation of the first unread message and second message read information based on the message read confirmation of the second unread message to the server 200 outside the electronic device 100. In this case, the first message read information and the second message read information may be included in a single piece of message read information to be transmitted to the outside server 200 at the same time or may be transmitted to the outside server 200 at different times.

FIG. 14 illustrates a network environment including an electronic device according to various embodiments of the present disclosure.

Referring to FIG. 14, an electronic device 1601, in a network environment 1600, includes a bus 1610, a processor 1620, a memory 1630, an input/output interface 1650, a display 1660, and a communication interface 1670. According to some embodiment, the electronic device 1601 may omit at least one of the components or further include another component.

The bus 1610 may be a circuit connecting the above described components and transmitting communication (e.g., a control message) between the above described components.

The processor 1620 may include one or more of central processing unit (CPU), application processor (AP) or communication processor (CP). For example, the processor 1620 may control at least one component of the electronic device 1601 and/or execute calculation relating to communication or data processing.

The memory 1630 may include volatile and/or non-volatile memory. For example, the memory 1630 may store command or data relating to at least one component of the electronic device 1601. According to some embodiment, the memory may store software and/or program 1640. For example, the program 1640 may include a kernel 1641, middleware 1643, an application programming interface (API) 1645, and/or an application 1647 and so on. At least one portion of the kernel 1641, the middleware 1643 and the API 1645 may be defined as operating system (OS).

The kernel 1641 controls or manages system resources (e.g., the bus 1610, the processor 1620, or the memory 1630) used for executing an operation or function implemented by the remaining other program, for example, the middleware 1643, the API 1645, or the application 1647. Further, the kernel 1641 provides an interface for accessing individual components of the electronic device 1601 from the middleware 1643, the API 1645, or the application 1647 to control or manage the components.

The middleware 1643 performs a relay function of allowing the API 1645 or the application 1647 to communicate with the kernel 1641 to exchange data. Further, in operation requests received from the application 1647, the middleware 1643 performs a control for the operation requests (e.g., scheduling or load balancing) by using a method of assigning a priority, by which system resources (e.g., the bus 1610, the processor 1620, the memory 1630 and the like) of the electronic device 1601 may be used, to the application 1647.

The API 1645 is an interface by which the application 1647 may control a function provided by the kernel 1641 or the middleware 1642 and includes, for example, at least one interface or function (e.g., command) for a file control, a window control, image processing, or a character control.

The input/output interface 1650 may be interface to transmit command or data inputted by a user or another external device to another component(s) of the electronic device 1601. Further, the input/output interface 1650 may output the command or data received from the another component(s) of the electronic device 1601 to the user or the another external device.

The display 1660 may include, for example, liquid crystal display (LCD), light emitting diode (LED), organic LED (OLED), plastic OLED (POLED) or micro electro mechanical system (MEMS) display, or electronic paper display. The display 1660 may display, for example, various contents (text, image, video, icon, or symbol, and so on) to a user. The display 160 may include a touch screen, and receive touch, gesture, approaching, or hovering input using a part of body of the user.

The communication interface 1670 may set communication of the electronic device 1601 and external device (e.g., a first external device 1602, a second external device 1604, or a server 1606). For example, the communication interface 1670 may be connected with the network 1662 through wireless communication or wire communication and communicate with the external device (e.g., a second external device 1604 or server 1606).

Wireless communication may use, as cellular communication protocol, at least one of long-term evolution (LTE), LTE advanced (LTE-A), code division multiple access (CDMA), wideband CDMA (WCDMA), universal mobile telecommunications system (UMTS), wireless broadband (WiBro), global system for mobile communications (GSM), and the like, for example. A short-range communication may include, for example, at least one of Wi-Fi, Bluetooth (BT), near field communication (NFC), magnetic secure transmission or near field magnetic data stripe transmission (MST), and global navigation satellite system (GNSS), and the like.

An MST module is capable of generating pulses corresponding to transmission data using electromagnetic signals, so that the pulses can generate magnetic field signals. The electronic device 1601 transmits the magnetic field signals to a point of sales (POS) terminal (reader). The POS terminal (reader) detects the magnetic field signal via an MST reader, transforms the detected magnetic field signal into an electrical signal, and thus restores the data.

The GNSS may include at least one of, for example, a global positioning system (GPS), a global navigation satellite system (Glonass), a Beidou navigation satellite system (hereinafter, referred to as "Beidou"), and Galileo (European global satellite-based navigation system). Hereinafter, the "GPS" may be interchangeably used with the "GNSS" in the present disclosure. Wired communication may include, for example, at least one of universal serial bus (USB), high definition multimedia interface (HDMI), recommended standard-232 (RS-232), plain old telephone service (POTS), and the like. The network 1662 may include telecommunication network, for example, at least one of a computer network (e.g., local area network (LAN) or wide area network (WAN)), internet, and a telephone network.

Each of the first external device 1602 and the second external device 1604 may be same type or different type of device with the electronic device 1601. According to some embodiment, the server 1606 may include one or more group of servers. According to various embodiments, at least one portion of executions executed by the electronic device may be performed by one or more electronic devices (e.g., external electronic device 1602, 1604, or server 1606). According to some embodiments, when the electronic device 1601 should perform a function or service automatically, the electronic device 1601 may request performing of at least one function to the another device (e.g., external electronic device 1602, 1604, or server 1606). For the above, cloud computing technology, distributed computing technology, or client-server computing technology may be used, for example.

Meanwhile, the electronic device 1601 of FIG. 14 may correspond to the electronic device 300 of FIG. 3. The processor 1620 of FIG. 14 may correspond to the processor 310 of FIG. 3. The communication interface 1670 of FIG. 14 may correspond to the communication unit 320 of FIG. 3. The input/output interface 1650 of FIG. 14 may correspond to the user input unit 330 of FIG. 3. The display 1660 of FIG. 14 may correspond to the display 341 of FIG. 3. The memory 1630 of FIG. 14 may correspond to the memory 350 of FIG. 3. The server 1606 of FIG. 14 may correspond to the server 200 of FIG. 2.

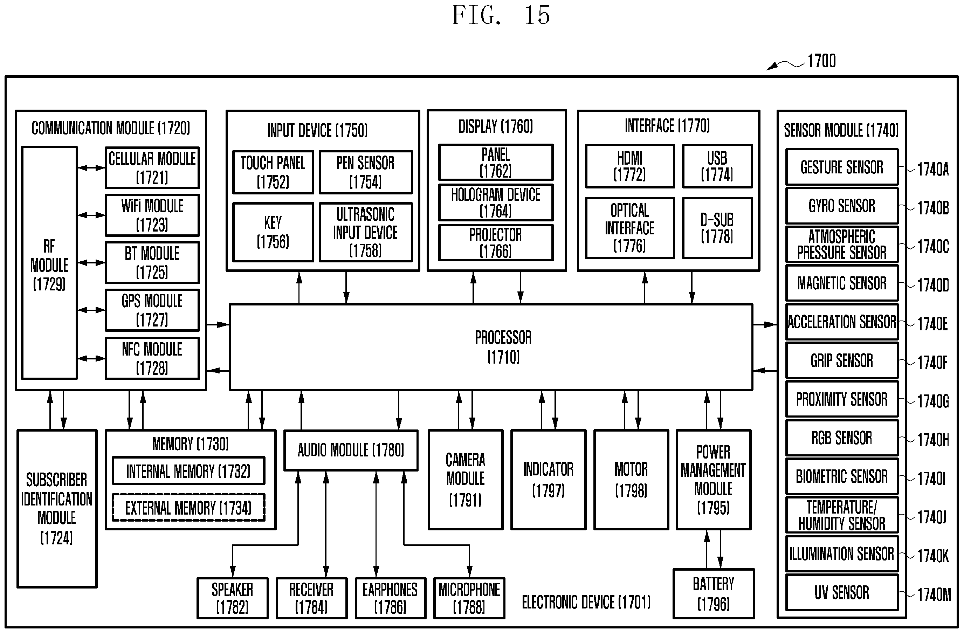

FIG. 15 illustrates a block diagram of an electronic device according to an embodiment of the present disclosure.

Referring to FIG. 15, an electronic device 1701 may configure, for example, a whole or a part of the electronic device 1601 illustrated in FIG. 14. The electronic device 1701 includes one or more APs 1710, a communication module 1720, a subscriber identification module (SIM) card 1724, a memory 1730, a sensor module 1740, an input device 1750, a display 1760, an interface 1770, an audio module 1780, a camera module 1791, a power managing module 1795, a battery 1796, an indicator 1797, and a motor 1798.

The AP 1710 operates an OS or an application program so as to control a plurality of hardware or software component elements connected to the AP 1710 and execute various data processing and calculations including multimedia data. The AP 1710 may be implemented by, for example, a system on chip (SoC). According to an embodiment, the processor 1710 may further include a graphics processing unit (GPU) and/or image signal processor (ISP). The AP 1710 may include at least one portion of components illustrated in FIG. 15 (e.g., a cellular module 1721). The AP 1710 may load command or data received from at least one of another component (e.g., non-volatile memory), store various data in the non-volatile memory.

The communication module 1720 may include same or similar components with the communication interface 1670 of FIG. 14. The communication module 1720, for, example, may include the cellular module 1721, a Wi-Fi module 1723, a BT module 1725, a GPS module 1727, a NFC module 1728, and a radio frequency (RF) module 1729.

The cellular module 1721 provides a voice, a call, a video call, a short message service (SMS), or an internet service through a communication network (e.g., LTE, LTE-A, CDMA, WCDMA, UMTS, WiBro, GSM and the like). Further, the cellular module 1721 may distinguish and authenticate electronic devices within a communication network by using a SIM (e.g., the SIM card 1724). According to an embodiment, the cellular module 1721 performs at least some of the functions which may be provided by the AP 1710. For example, the cellular module 1721 may perform at least some of the multimedia control functions. According to an embodiment, the cellular module 1721 may include a CP.

Each of the Wi-Fi module 1723, the BT module 1725, the GPS module 1727, and the NFC module 1728 may include, for example, a processor for processing data transmitted/received through the corresponding module. Although the cellular module 1721, the Wi-Fi module 1723, the BT module 1725, the GPS module 1727, and the NFC module 1728 are at least some (e.g., two or more) of the cellular module 1721, the Wi-Fi module 1723, the BT module 1725, the GPS module 1727, and the NFC module 1728, the cellular module 1721, the Wi-Fi module 1723, the BT module 1725, the GPS module 1727, and the NFC module 1728 may be included in one integrated chip (IC) or one IC package according to one embodiment. For example, at least some (e.g., the CP corresponding to the cellular module 1721 and the Wi-Fi processor corresponding to the Wi-Fi module 1723 of the processors corresponding to the cellular module 1721, the Wi-Fi module 1723, the BT module 1725, the GPS module 1727, and the NFC module 1728 may be implemented by one SoC.

The RF module 1729 transmits/receives data, for example, an RF signal. Although not illustrated, the RF module 1729 may include, for example, a transceiver, a power amp module (PAM), a frequency filter, a low noise amplifier (LNA) and the like. Further, the RF module 1729 may further include a component for transmitting/receiving electronic waves over a free air space in wireless communication, for example, a conductor, a conducting wire, and the like. Although the cellular module 1721, the Wi-Fi module 1723, the BT module 1725, the GPS module 1727, and the NFC module 1728 share one RF module 1729 in FIG. 15, at least one of the cellular module 1721, the Wi-Fi module 1723, the BT module 1725, the GPS module 1727, and the NFC module 1728 may transmit/receive an RF signal through a separate RF module according to one embodiment.

The SIM card 1724 is a card including a SIM and may be inserted into a slot formed in a particular portion of the electronic device. The SIM card 1724 includes unique identification information (e.g., integrated circuit card identifier (ICCID)) or subscriber information (e.g., international mobile subscriber identity (IMSI).

The memory 1730 (e.g., memory 1630) may include an internal memory 1732 or an external memory 1734. The internal memory 1732 may include, for example, at least one of a volatile memory (e.g., a random access memory (RAM), a dynamic RAM (DRAM), a static RAM (SRAM), a synchronous dynamic RAM (SDRAM), and the like), and a non-volatile Memory (e.g., a read only memory (ROM), a one-time programmable ROM (OTPROM), a programmable ROM (PROM), an erasable and programmable ROM (EPROM), an electrically erasable and programmable ROM (EEPROM), a mask ROM, a flash ROM, a not and (NAND) flash memory, a not or (NOR) flash memory, and the like).

According to an embodiment, the internal memory 1732 may be a solid state drive (SSD). The external memory 1734 may further include a flash drive, for example, a compact flash (CF), a secure digital (SD), a micro-SD, a mini-SD, an extreme digital (xD), or a memory stick. The external memory 1734 may be functionally connected to the electronic device 1701 through various interfaces. According to an embodiment, the electronic device 1701 may further include a storage device (or storage medium) such as a hard drive.

The sensor module 1740 measures a physical quantity or detects an operation state of the electronic device 1701, and converts the measured or detected information to an electronic signal. The sensor module 1740 may include, for example, at least one of a gesture sensor 1740A, a gyro sensor 1740B, an atmospheric pressure (barometric) sensor 1740C, a magnetic sensor 1740D, an acceleration sensor 1740E, a grip sensor 1740F, a proximity sensor 1740G, a color sensor 1740H (e.g., red, green, and blue (RGB) sensor) 1740H, a biometric sensor 1740I, a temperature/humidity sensor 1740J, an illumination (light) sensor 1740K, and a ultraviolet (UV) sensor 1740M. Additionally or alternatively, the sensor module 1740 may include, for example, an olfactory sensor or an electronic nose (E-nose) sensor, an electromyography (EMG) sensor, an electroencephalogram (EEG) sensor, an electrocardiogram (ECG) sensor, an infrared (IR) sensor, an iris sensor, a fingerprint sensor (not illustrated), and the like. The sensor module 1740 may further include a control circuit for controlling one or more sensors included in the sensor module 1740.

The input device 1750 includes a touch panel 1752, a (digital) pen sensor 1754, a key 1756, and an ultrasonic input device 1758. For example, the touch panel 1752 may recognize a touch input in at least one type of a capacitive type, a resistive type, an infrared type, and an acoustic wave type. The touch panel 1752 may further include a control circuit. In the capacitive type, the touch panel 1752 may recognize proximity as well as a direct touch. The touch panel 1752 may further include a tactile layer. In this event, the touch panel 1752 provides a tactile reaction to the user.

The digital stylus or (digital) pen sensor 1754 may be implemented, for example, using a method identical or similar to a method of receiving a touch input of the user, or using a separate recognition sheet. The key 1756 may include, for example, a physical button, an optical key, or a key pad. The ultrasonic input device 1758 is a device which may detect an acoustic wave by a microphone (e.g., a microphone 1788) of the electronic device 1701 through an input means generating an ultrasonic signal to identify data and may perform wireless recognition. According to an embodiment, the electronic device 1701 receives a user input from an external device (e.g., computer or server) connected to the electronic device 1701 by using the communication module 1720.

The display 1760 (e.g., display 1660) includes a panel 1762, a hologram device 1764, and a projector 1766. The panel 1762 may be, for example, a LCD or an active matrix OLED (AM-OLED). The panel 1762 may be implemented to be, for example, flexible, transparent, or wearable. The panel 1762 may be configured by the touch panel 1752 and one module. The hologram device 1764 shows a stereoscopic image in the air by using interference of light. The projector 1766 projects light on a screen to display an image. For example, the screen may be located inside or outside the electronic device 1701. According to an embodiment, the display 1760 may further include a control circuit for controlling the panel 1762, the hologram device 1764, and the projector 1766.

The interface 1770 includes, for example, a HDMI 1772, an USB 1774, an optical interface 1776, and a D-subminiature (D-sub) 1778. The interface 1770 may be included in, for example, the communication interface 170 illustrated in FIG. 1. Additionally or alternatively, the interface 1770 may include, for example, a mobile high-definition link (MHL) interface, an SD card/multi-media card (MMC), or an infrared data association (IrDA) standard interface.

The audio module 1780 bi-directionally converts a sound and an electronic signal. At least some components of the audio module 1780 may be included in, for example, the input/output interface 150 illustrated in FIG. 1. The audio module 1780 processes sound information input or output through, for example, a speaker 1782, a receiver 1784, an earphone 1786, the microphone 1788 and the like.

The camera module 1791 is a device which may photograph a still image and a video. According to an embodiment, the camera module 1791 may include one or more image sensors (e.g., a front sensor or a back sensor), an image signal processor (ISP) (not shown) or a flash (e.g., an LED or xenon lamp).

The power managing module 1795 manages power of the electronic device 1701. Although not illustrated, the power managing module 1795 may include, for example, a power management integrated circuit (PMIC), a charger IC, or a battery fuel gauge.

The PMIC may be mounted to, for example, an integrated circuit or an SoC semiconductor. A charging method may be divided into wired and wireless methods. The charger IC charges a battery and prevent over voltage or over current from flowing from a charger. According to an embodiment, the charger IC includes a charger IC for at least one of the wired charging method and the wireless charging method. The wireless charging method may include, for example, a magnetic resonance method, a magnetic induction method and an electromagnetic wave method, and additional circuits for wireless charging, for example, circuits such as a coil loop, a resonant circuit, a rectifier and the like may be added.

The battery fuel gauge measures, for example, a remaining quantity of the battery 1796, or a voltage, a current, or a temperature during charging. The battery 1796 may store or generate electricity and supply power to the electronic device 1701 by using the stored or generated electricity. The battery 1796 may include a rechargeable battery or a solar battery.

The indicator 1797 shows particular statuses of the electronic device 1701 or a part (e.g., AP 1710) of the electronic device 1701, for example, a booting status, a message status, a charging status and the like. The motor 1798 converts an electrical signal to a mechanical vibration. Although not illustrated, the electronic device 1701 may include a processing unit (e.g., GPU) for supporting a mobile TV. The processing unit for supporting the mobile TV may process, for example, media data according to a standard of digital multimedia broadcasting (DMB), digital video broadcasting (DVB), media flow and the like.

Each of the components of the electronic device according to various embodiments of the present disclosure may be implemented by one or more components and the name of the corresponding component may vary depending on a type of the electronic device. The electronic device according to various embodiments of the present disclosure may include at least one of the above described components, a few of the components may be omitted, or additional components may be further included. Also, some of the components of the electronic device according to various embodiments of the present disclosure may be combined to form a single entity, and thus may equivalently execute functions of the corresponding components before being combined.

Meanwhile, the electronic device 1701 of FIG. 15 may correspond to the electronic device 300 of FIG. 3. The processor 1710 of FIG. 15 may correspond to the processor 310 of FIG. 3. The communication module 1720 of FIG. 15 may correspond to the communication unit 320 of FIG. 3. The input device 1750 of FIG. 15 may correspond to the user input unit 330 of FIG. 3. The display 1760 of FIG. 15 may correspond to the display 341 of FIG. 3. The memory 1730 of FIG. 15 may correspond to the memory 350 of FIG. 3. The speaker 1782 of FIG. 15 may correspond to the speaker 342 of FIG. 3. The motor 1798 of FIG. 15 may correspond to the vibration module 343 of FIG. 3. The power management module 1795 and the battery 1796 of FIG. 15 may correspond to the power supply unit 360 of FIG. 3.

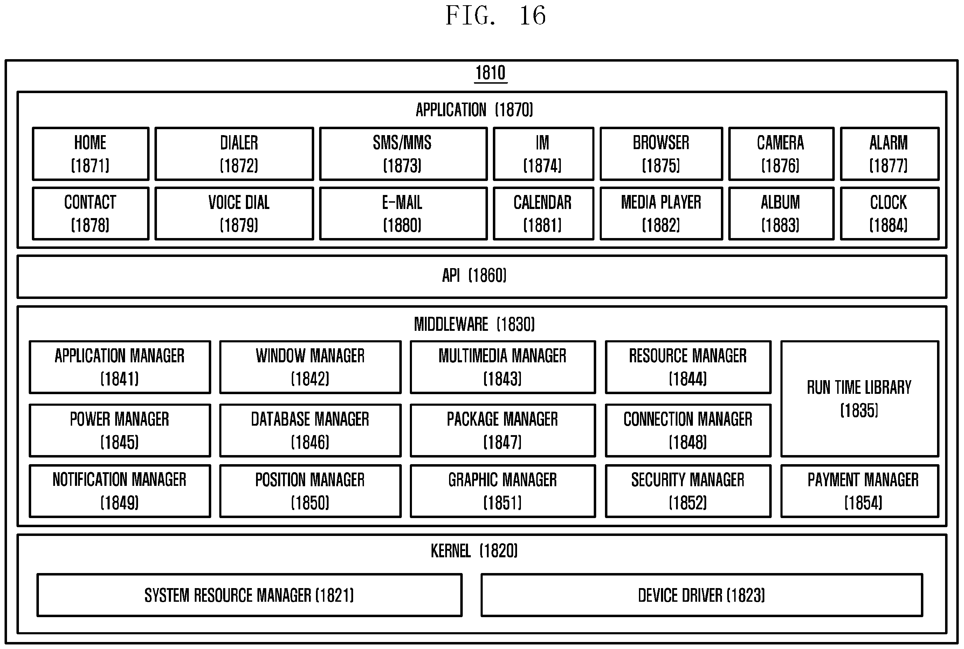

FIG. 16 is a block diagram illustrating a programming module according to an embodiment of the present disclosure.

Referring to FIG. 16, a programming module 1810 may be included, e.g. stored, in the electronic apparatus 1600, e.g. the memory 1630, as illustrated in FIG. 14. At least a part of the programming module 1810 (e.g., program 1640) may be configured by software, firmware, hardware, and/or combinations of two or more thereof. The programming module 1810 may include an OS that is implemented in hardware, e.g., the hardware 1700 (shown in FIG. 15) to control resources related to an electronic device, e.g., the electronic device 100 (100-1, 100-2, or 100-3 shown in FIG. 1), and/or various applications. e.g., applications 1870, driven on the OS. For example, the OS may be Android^{™}, iOS^{™}, Windows^{™}, Symbian^{®}, Tizen^{®}, Bada^{®}, and the like. Referring to FIG. 16, the programming module 1810 may include a kernel 1820, middleware 1830, an API 1860, and the applications 1870 (e.g., application 1647). At least part of the program module 1810 may be preloaded on the electronic device or downloaded from a server (e.g., an electronic device 1602, 1604, server 1606, etc.).

The kernel 1820, which may be like the kernel 1641 shown in FIG. 14, may include a system resource manager 1821 and/or a device driver 1823. The system resource manager 1821 may include, for example, a process manager, a memory manager, and a file system manager. The system resource manager 1821 may control, allocate, and/or collect system resources. The device driver 1823 may include, for example, a display driver, a camera driver, a BT driver, a shared memory driver, a USB driver, a keypad driver, a Wi-Fi driver, and an audio driver. Further, according to an embodiment, the device driver 1823 may include an inter-process communication (IPC) driver (not illustrated).

The middleware 1830 may include a plurality of modules implemented in advance for providing functions commonly used by the applications 1870. Further, the middleware 1830 may provide the functions through the API 1860 such that the applications 1870 may efficiently use restricted system resources within the electronic apparatus. For example, as shown in FIG. 16, the middleware 1830 may include at least one of a runtime library 1835, an application manager 1841, a window manager 1842, a multimedia manager 1843, a resource manager 1844, a power manager 1845, a database manager 1846, a package manager 1847, a connectivity manager 1848, a notification manager 1849, a location or position manager 1850, a graphic manager 1851, a security manager 1852 and a payment manager 1854.

The runtime library 1835 may include a library module that a compiler uses in order to add a new function through a programming language while one of the applications 1870 is being executed. According to an embodiment, the runtime library 1835 may perform an input/output, memory management, and/or a function for an arithmetic function.

The application manager 1841 may manage a life cycle of at least one of the applications 1870. The window manager 1842 may manage graphical user interface (GUI) resources used by a screen. The multimedia manager 1843 may detect formats used for reproduction of various media files, and may perform encoding and/or decoding of a media file by using a codec suitable for the corresponding format. The resource manager 1844 may manage resources such as a source code, a memory, and a storage space of at least one of the applications 1870.

The power manager 1845 may manage a battery and/or power, while operating together with a basic input/output system (BIOS), and may provide power information used for operation. The database manager 1846 may manage generation, search, and/or change of a database to be used by at least one of the applications 1870. The package manager 1847 may manage installation and/or an update of an application distributed in a form of a package file.

For example, the connectivity manager 1848 may manage wireless connectivity such as Wi-Fi or BT. The notification manager 1849 may display and/or notify of an event, such as an arrival message, a promise, a proximity notification, and the like, in such a way that does not disturb a user. The location manager 1850 may manage location information of an electronic apparatus. The graphic manager 1851 may manage a graphic effect which will be provided to a user, and/or a UI related to the graphic effect. The security manager 1852 may provide all security functions used for system security and/or user authentication. According to an embodiment, when an electronic apparatus, e.g., the electronic apparatus 100, has a telephone call function, the middleware 1830 may further include a telephony manager (not illustrated) for managing a voice and/or video communication function of the electronic apparatus. The payment manger 1854 is capable of relaying payment information from the application 1870 to an application 1870 or a kernel 1820. Alternatively, the payment manager 1854 is capable of storing payment-related information received from an external device in the electronic device 1700 or transmitting information stored in the electronic device 1700 to an external device.

The middleware 1830 may generate and use a new middleware module through various functional combinations of the aforementioned internal element modules. The middleware 1830 may provide modules specialized according to types of OSs in order to provide differentiated functions. Further, the middleware 1830 may dynamically remove some of the existing elements and/or add new elements. Accordingly, the middleware 1830 may exclude some of the elements described in the various embodiments of the present disclosure, further include other elements, and/or substitute the elements with elements having a different name and performing a similar function.

The API 1860, which may be similar to the API 1633, is a set of API programming functions, and may be provided with a different configuration according to the OS. For example, in a case of Android or iOS, one API set may be provided for each of platforms, and in a case of Tizen, two or more API sets may be provided.

The applications 1870, which may include an application similar to the application 1647 shown in FIG. 14, may include, for example, a preloaded application and/or a third party application. The applications 1870 may include one or more of the following: a home application 1871 a dialer application 1872, an SMS/multimedia messaging service (MMS) application 1873, an instant messaging (IM) application 1874, a browser application 1875, a camera application 1876, an alarm application 1877, a contact application 1878, a voice dial application 1879, an email application 1880, a calendar application 1881, a media player application 1882, an album application 1883, a clock application 1884, a payment application, a health care application (e.g., the measurement of blood pressure, exercise intensity, etc.), an application for providing environment information (e.g., atmospheric pressure, humidity, temperature, etc.), etc. However, the present embodiment is not limited thereto, and the applications 1870 may include any other similar and/or suitable application.

According to an embodiment, the applications 1870 are capable of including an application for supporting information exchange between an electronic device (e.g., electronic device 1601 shown in FIG. 14) and an external device (e.g., electronic devices 1602 and 1604), which is hereafter called 'information exchange application'). The information exchange application is capable of including a notification relay application for relaying specific information to external devices or a device management application for managing external devices.

For example, the notification relay application is capable of including a function for relaying notification information, created in other applications of the electronic device (e.g., SMS/MMS application, email application, health care application, environment information application, etc.) to external devices (e.g., electronic devices 1602 and 1604). In addition, the notification relay application is capable of receiving notification information from external devices to provide the received information to the user.

The device management application is capable of managing (e.g., installing, removing or updating) at least one function of an external device (e.g., electronic devices 1602 and 1604) communicating with the electronic device. Examples of the function are a function of turning-on/off the external device or part of the external device, a function of controlling the brightness (or resolution) of the display, applications running on the external device, services provided by the external device, etc. Examples of the services are a call service, messaging service, etc.

According to an embodiment, the applications 1870 are capable of including an application (e.g., a health care application of a mobile medical device, etc.) specified attributes of an external device (e.g., electronic devices 1602 and 1604). According to an embodiment, the applications 1870 are capable of including applications received from an external device (e.g., a server 1606, electronic devices 1602 and 1604). According to an embodiment, the applications 1870 are capable of including a preloaded application or third party applications that can be downloaded from a server. It should be understood that the components of the program module 1810 may be called different names according to types of operating systems (OSs).

According to various embodiments, at least part of the program module 1810 can be implemented with software, firmware, hardware, or any combination of two or more of them. At least part of the program module 1810 can be implemented (e.g., executed) by a processor (e.g., processor 1710). At least part of the programing module 1810 may include modules, programs, routines, sets of instructions or processes, etc., in order to perform one or more functions.

In the present disclosure, the terminology 'module' refers to a 'unit' including hardware, software, firmware or a combination thereof. For example, the terminology 'module' is interchangeable with 'unit,' 'logic,' 'logical block,' 'component,' 'circuit,' or the like. A 'module' may be the smallest unit or a part of an integrated component. A 'module' may be the smallest unit or a part thereof that can perform one or more functions. A 'module' may be implemented in mechanical or electronic mode. For example, a 'module' may include at least one of the following: an application specific integrated circuit (ASIC) chip, field-programmable gate array (FPGAs) and a programmable-logic device that can perform functions that are known or will be developed.

At least part of the method (e.g., operations) or devices (e.g., modules or functions) according to various embodiments may be implemented with instructions that can be conducted via various types of computers and stored in computer-readable storage media, as types of programming modules, for example. One or more processors (e.g., processor 1620) can execute command instructions, thereby performing the functions. An example of the computer-readable storage media may be memory 1630.

Examples of computer-readable media include: magnetic media, such as hard disks, floppy disks, and magnetic media (e.g., magnetic tape); optical media such as compact disc ROM (CD-ROM) disks and DVD; magneto-optical media, such as floptical disks; and hardware devices such as ROM, RAM, flash memory, etc. Examples of program instructions include machine code instructions created by assembly languages, such as a compiler, and code instructions created by a high-level programming language executable in computers using an interpreter, etc. The described hardware devices may be configured to act as one or more software modules to perform the operations of various embodiments described above, or vice versa.

Modules or programming modules according to various embodiments may include one or more components, remove part of them described above, or further include new components. The operations performed by modules, programming modules, or other components, according to various embodiments, may be executed in serial, parallel, repetitive or heuristic fashion. Part of the operations can be executed in any other order, skipped, or executed with additional operations.

Meanwhile, the software module 1810 of FIG. 16 may correspond to the software configuration 400 (shown in FIG. 4) of the electronic device 100 (shown in FIG. 1). The application 1870 of FIG. 16 may correspond to the application layer 410 of FIG. 4. The middleware 1830 of FIG. 16 may include the framework layer 420 of FIG. 4. The kernel 1820 of FIG. 16 may correspond to the kernel layer 430 of FIG. 4.

While the present disclosure has been shown and described with reference to various embodiments thereof, it will be understood by those skilled in the art that various changes in form and details may be made therein without departing from the spirit and scope of the present disclosure as defined by the appended claims and their equivalents.

## Claims

1. An electronic device comprising:
a display; and
a processor configured to be functionally connected with the display,
wherein the processor is further configured to:
run an application for processing a message,
provide a screen displaying a first unread message and a second unread message on the display through the application,
process message read confirmation of the first unread message at a first time, and
process message read confirmation of the second unread message at a second time that is different from the first time.

2. The electronic device of claim 1, wherein the first time and the second time are determined based on screen-displayed states of the first unread message and the second unread message, respectively.

3. The electronic device of claim 1, wherein, when times for which the first unread message and the second unread message are displayed on the screen meet or exceed a threshold, the processor processes the first unread message and the second unread message as read.

4. The electronic device of claim 1, wherein the first time and the second time are determined based on a read unit according to a number of at least one of numbers, symbols, letters, words, and sentences comprised in the first unread message and the second unread message, respectively.

5. The electronic device of claim 1, wherein the first time and the second time are determined based on a user's scroll speed on the screen.

6. The electronic device of claim 5 wherein, when the scroll speed is less than a threshold, the processor is further configured to process the first unread message and the second unread message as read.

7. The electronic device of claim 1, wherein the first time and the second time are determined based on sizes of screen-displayed portions of the first unread message and the second unread message, respectively.

8. The electronic device of claim 1, further comprising a transmitter configured to transmit:
first message read information based on the message read confirmation of the first unread message, and
second message read information based on the message read confirmation of the second unread message to a server outside the electronic device.

9. The electronic device of claim 1, wherein the processor is further configured to display:
a message that is processed as read, and
a message that is processed as unread in a distinguishable manner according to the message read confirmations.

10. A method for processing a message by a processor, the method comprising:
running an application for processing a message;
providing a screen displaying a first unread message and a second unread message through the application;
processing message read confirmation of the first unread message at a first time; and
processing message read confirmation of the second unread message at a second time that is different from the first time, using the processor.

11. The method of claim 10, wherein the first time and the second time are determined based on screen-displayed states of the first unread message and the second unread message, respectively.

12. The method of claim 10, wherein the processing of the message read confirmation of the first unread message and the message read confirmation of the second unread message comprises:
processing the first unread message and the second unread message as read when times for which the first unread message and the second unread message are displayed on the screen meet or exceed a threshold.

13. The method of claim 10, wherein the processing of the message read confirmation of the first unread message and or the second unread message comprises:
determining a user's gaze at the screen.

14. A non-transitory computer-readable recording medium having recorded thereon at least one program comprising commands, which when executed by a computer, performs a method, the method comprising:
running an application for processing a message;
providing a screen comprising a first unread message and a second unread message through the application;
processing message read confirmation of the first unread message at a first time; and
processing message read confirmation of the second unread message at a second time that is different from the first time.

15. The non-transitory computer-readable recording medium of claim 20, wherein the first time and the second time are determined based on screen-displayed states of the first unread message and the second unread message, respectively.
